(19) Europäisches Patentamt
European Patent Office
Office européen des brevets

(11) EP 2 995 638 B1

(12) **EUROPEAN PATENT SPECIFICATION**

(45) Date of publication and mention of the grant of the patent:
**12.03.2025 Bulletin 2025/11**

(21) Application number: **14803794.8**

(22) Date of filing: **22.05.2014**

(51) International Patent Classification (IPC):
***C08J 3/22*** (2006.01) ***B60C 1/00*** (2006.01)
***C08K 3/04*** (2006.01) ***C08K 3/36*** (2006.01)
***C08K 5/37*** (2006.01) ***C08L 9/08*** (2006.01)
***C08L 9/10*** (2006.01) ***C08L 7/00*** (2006.01)
***C08L 9/06*** (2006.01) ***C08L 15/00*** (2006.01)
***C08F 6/16*** (2006.01)

(52) Cooperative Patent Classification (CPC):
(C-Sets available)
**C08L 9/06; B60C 1/0016; C08F 6/16; C08J 3/22; C08K 3/04; C08K 3/36; C08L 15/00;** C08J 2309/08
(Cont.)

(86) International application number:
**PCT/JP2014/063591**

(87) International publication number:
**WO 2014/192635 (04.12.2014 Gazette 2014/49)**

(54) **PNEUMATIC TIRE AND RUBBER MASTERBATCH**

LUFTREIFEN UND KAUTSCHUK-MASTERBATCH

PNEUMATIQUE ET MÉLANGE MAÎTRE DE CAOUTCHOUC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**31.05.2013 JP 2013115288**
**31.05.2013 JP 2013116005**
**31.05.2013 JP 2013116006**
**31.05.2013 JP 2013116007**
**31.05.2013 JP 2013116009**
**31.05.2013 JP 2013116010**
**31.05.2013 JP 2013116011**
**31.05.2013 JP 2013116012**

(43) Date of publication of application:
**16.03.2016 Bulletin 2016/11**

(73) Proprietor: **Sumitomo Rubber Industries, Ltd.**
**Kobe-shi, Hyogo 651-0072 (JP)**

(72) Inventors:
- **INOUE Satoru**
**Kobe-shi**
**Hyogo 651-0072 (JP)**
- **FUJISAWA Koji**
**Kobe-shi**
**Hyogo 651-0072 (JP)**
- **MORIMOTO Kenichi**
**Yokkaichi-shi**
**Mie 510-8530 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 1 666 519**
**JP-A- 2000 248 120**
**JP-A- 2011 173 510**
**JP-A- 2011 189 807**
**JP-A- 2011 189 808**
**JP-A- 2012 102 239**
**JP-A- 2012 102 240**
**JP-A- 2012 111 888**
**JP-A- H06 192 480**
**US-A1- 2002 169 245**

- **DATABASE WPI Week 200063, Derwent World Patents Index; AN 2000-650047, XP002766536**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **KAZUHITO SONE: "Structure and Physical Properties of SBR/Carbon Black Masterbatch Produced by Wet Dispersion System", JOURNAL OF THE SOCIETY OF RUBBER INDUSTRY, vol. 67, no. 6, 1994, pages 391 - 401, XP055297019**
- **KAZUHITO SONE: "Abrasion of wet method SBR/ carbon masterbatch", GOMU GIJUTSU SYMPOSIUM TEXT, 27TH, 1992, pages 49 - 52, XP008182528**
- **K. SONE: "Advantage of SBR/carbon black masterbatch for tire tread application", RUBBER WORLD, vol. 206, no. 1, 1992, pages 29 - 34, XP008181327**



(52) Cooperative Patent Classification (CPC): (Cont.)

C-Sets
**C08F 6/16, C08L 9/06;**
**C08F 6/16, C08L 15/00;**
**C08L 9/06, C08L 15/00, C08K 3/36, C08K 3/04;**
**C08L 15/00, C08L 9/06, C08K 3/36, C08K 3/04**

## Description

### TECHNICAL FIELD

The present invention relates to pneumatic tires and a rubber masterbatch.

### BACKGROUND ART

The recent demand for safe and fuel efficient vehicles has created a need to simultaneously improve the conflicting properties, such as mechanical properties, abrasion resistance, fuel economy, wet-grip performance, and durability of rubber materials for tires. Techniques for satisfying such conflicting requirements are known, including the use of silica as a filler for reducing heat build-up or the use of fine particle carbon black having high reinforcing properties and excellent abrasion resistance.

For example, addition of silica and a silane coupling agent to a solution-polymerized rubber can improve the above properties to some extent. Unfortunately, the use of a solution-polymerized rubber, which usually has a narrow molecular weight distribution, may reduce the processability and also increases the production cost.

Radical polymerization can be readily carried out and is thus commonly employed in the industry. Radical polymerization enables production of a readily processable emulsion-polymerized rubber which generally has a wide, monomodal molecular weight distribution. However, an emulsion-polymerized rubber mixed with silica or a silane coupling agent does not improve the properties as much as the case of using a solution-polymerized rubber. This may be because, since agents for emulsion polymerization, such as a polymerization initiator, an emulsifier, a polymerization modifier, a pH adjuster, or a polymerization terminator, are used for preparing an emulsion-polymerized rubber, a part of the residual emulsifiers inhibits the reaction between a silane coupling agent and silica, thereby adversely affecting the abrasion resistance, durability, or other properties of a vulcanized rubber composition.

In order to solve this problem, Patent Literature 1 discloses a rubber composition for treads which contains, as a rubber component for silica-containing compounds, an emulsion-polymerized rubber from which agents for emulsion polymerization, such as an emulsifier, and the like are removed to give an acetone extractable content of at most 2.5% by mass. Such a rubber composition achieves both low heat build-up properties and abrasion resistance. However, only the silica-containing compound is disclosed and no carbon black-containing compound is examined. Thus, simultaneous improvement of the properties is desired also in a carbon black-containing compound.

JP 2000-248,120 A discloses a rubber composition for a tire tread which includes silica, a silane coupling agent as well as an emulsion polymerization rubber having an acetone extraction part of 2.5 weight % or less.

### CITATION LIST

### PATENT LITERATURE

Patent Literature 1: Japanese Patent No. 4272289

### SUMMARY OF INVENTION

### TECHNICAL PROBLEM

The present invention aims to solve the problem and provide pneumatic tires that have good processability and achieve a balanced improvement in wet-grip performance, fuel economy, abrasion resistance, flex fatigue resistance, and durability.

The present invention also aims to solve the above problem and provide a rubber masterbatch that achieves a balanced improvement in mechanical strength, abrasion resistance, and flex crack resistance, and a method for producing the rubber masterbatch.

### SOLUTION TO PROBLEM

The present invention relates to a pneumatic tire, including at least one tire component selected from the group consisting of a sidewall, and a tire internal component, the at least one tire component being formed from a rubber composition containing carbon black, silica and an emulsion-polymerized rubber that has an acetone extractable content of at most 2.5% by mass when determined by an acetone extraction method, wherein the rubber composition comprises, relative to 100 parts by mass of a rubber component of the rubber composition 5 to 100 parts by mass of the carbon black, wherein the rubber composition used for sidewalls and tire internal components, comprises 10 % by mass or more and 70

% by mass or less of the emulsion-polymerized rubber, based on 100% by mass of the rubber component, and wherein the acetone extractable content in the emulsion-polymerized rubbers is determined in conformity with JIS K 6350.

The present invention relates to a pneumatic tire, including at least one tire component selected from the group consisting of a tread, a sidewall, and a tire internal component, the at least one tire component being formed from a rubber composition containing carbon black, silica, and an emulsion-polymerized rubber that has a soap content of at most 2.5% by mass and an organic acid content of at most 2.5% by mass, wherein the rubber composition comprises, relative to 100 parts by mass of a rubber component of the rubber composition 5 to 100 parts by mass of the carbon black, and wherein the rubber composition used for treads comprises 5 % by mass or more and 90 % by mass or less of the emulsion-polymerized rubber, based on 100% by mass of the rubber component, or wherein the rubber composition used for sidewalls and tire internal components comprises 10 % by mass or more and 70 % by mass or less of the emulsion-polymerized rubber, based on 100% by mass of the rubber component, wherein the soap content and the organic acid content in the emulsion-polymerized rubber are determined in conformity with JIS K 6237.

The rubber composition preferably contains, relative to 100 parts by mass of a rubber component of the rubber composition, 5 to 100 parts by mass of silica, and contains a silane coupling agent in an amount of 2 to 20 parts by mass relative to 100 parts by mass of the silica.

The emulsion-polymerized rubber is preferably an emulsion-polymerized styrene-butadiene rubber.

The emulsion-polymerized rubber preferably has an Mp of 250000 or higher and an Mw/Mn ratio of 3 or more.

The emulsion-polymerized rubber is preferably a modified emulsion-polymerized rubber that is obtained by emulsion-polymerizing a radical polymerizable monomer in the presence of a polar functional group-containing thiol compound, and has a polar functional group at a chain terminal.

The polar functional group-containing thiol compound is preferably a compound represented by Formula (1):

$$X\text{-}R^1\text{-}SH \qquad (1)$$

wherein X represents an ester group, a hydroxyl group, a carboxyl group, an amino group, or an alkoxysilyl group; and $R^1$ represents an optionally substituted alkylene group or arylene group.

The modified emulsion-polymerized rubber preferably has an Mw/Mn ratio of 4 or more.

Preferably, the rubber composition further contains a solution-polymerized styrene-butadiene rubber.

The present invention also relates to a rubber masterbatch, including a rubber component derived from an emulsion-polymerized rubber latex, and carbon black, the rubber masterbatch having an organic acid content of at most 2.0% by mass based on total solids of the rubber masterbatch, wherein the carbon black is mixed in an amount of 5 to 100 parts by mass relative to 100 parts by mass of the rubber component of the emulsion-polymerized rubber latex, wherein the amount of the rubber component in the emulsion-polymerized rubber latex is 15 to 60% by mass, wherein the organic acid content in the emulsion-polymerized rubber is determined in conformity with JIS K 6237.

The rubber masterbatch is preferably obtained by the steps of mixing an emulsion-polymerized rubber latex and a carbon black dispersion at a pH of 1.0 to 6.0, and separating liquid from the mixed dispersion. Preferably, the rubber masterbatch is obtained by the step of adjusting a pH of the mixed dispersion to 8.0 to 13.5 after the mixing step.

The present invention also relates to a method for producing a rubber masterbatch, including the steps of mixing an emulsion-polymerized rubber latex and a carbon black dispersion at a pH of 1.0 to 6.0, and separating liquid from the mixed dispersion, the method further including the step of reducing the organic acid content to at most 2.0% by mass based on total solids of the resulting rubber masterbatch, wherein the organic acid content is determined by the method defined in the description, and wherein the carbon black is mixed in an amount of 5 to 100 parts by mass relative to 100 parts by mass of the rubber component of the emulsion-polymerized rubber latex, wherein an amount of the rubber component in the emulsion-polymerized rubber latex is 15 to 60% by mass.

## ADVANTAGEOUS EFFECTS OF INVENTION

The present invention provides a pneumatic tire including at least one tire component selected from the group consisting of a sidewall, and a tire internal component, the at least one tire component being formed from a rubber composition containing carbon black, silica, and an emulsion-polymerized rubber that has an acetone extractable content of at most 2.5% by mass when determined by an acetone extraction method; or a pneumatic tire including at least one tire component selected from the group consisting of a tread, a sidewall, and a tire internal component, the at least one tire component being formed from a rubber composition containing carbon black, silica, and an emulsion-polymerized rubber that has a soap content of at most 2.5% by mass and an organic acid content of at most 2.5% by mass. Such pneumatic tires can have good processability and achieve a balanced improvement in wet-grip performance, fuel economy, abrasion resistance, flex fatigue resistance, and durability.

The present invention also provides a rubber masterbatch including a rubber component derived from an emulsion-polymerized rubber latex, and carbon black, the rubber masterbatch having an organic acid content of at most

2.0% by mass based on total solids of the rubber masterbatch. Such a masterbatch can achieve a balanced improvement in mechanical strength, abrasion resistance, and flex crack resistance.

DESCRIPTION OF EMBODIMENTS

[Pneumatic tire]

The pneumatic tires according to the first and second aspects of the present invention will be described below.

The pneumatic tire according to the first aspect of the present invention includes at least one tire component selected from the group consisting of a sidewall, and a tire internal component, the at least one tire component being formed from a rubber composition containing carbon black, silica, and an emulsion-polymerized rubber that has an acetone extractable content of at most 2.5% by mass when determined by an acetone extraction method. The pneumatic tire according to the second aspect of the present invention includes at least one tire component selected from the group consisting of a tread, a sidewall, and a tire internal component, the at least one tire component being formed from a rubber composition containing carbon black, silica, and an emulsion-polymerized rubber that has a soap content of at most 2.5% by mass and an organic acid content of at most 2.5% by mass.

The use of a rubber composition containing carbon black, silica, and either of an emulsion-polymerized rubber in which the acetone extractable content (mainly derived from agents for emulsion polymerization remaining in the rubber) is reduced to at most 2.5% by mass or an emulsion-polymerized rubber in which the soap content and the organic acid content are each reduced to at most 2.5% by mass enables preparation of a rubber composition that has good processability and achieves a balanced improvement in wet-grip performance, fuel economy, abrasion resistance, flex fatigue resistance (weather resistance), and durability. This seems to be because removal of components derived from emulsifiers including fatty acids in the emulsion-polymerized rubber enhances the interaction between the emulsion-polymerized rubber and carbon black in the rubber composition, thereby improving the above properties.

First, the rubber composition according to the first and second aspects of the present invention will be described.

Examples of the emulsion-polymerized rubber include rubber obtained through emulsion polymerization such as emulsion-polymerized styrene-butadiene rubber (E-SBR), emulsion-polymerized polybutadiene rubber (E-BR), emulsion-polymerized polyisoprene rubber (E-IR), emulsion-polymerized acrylonitrile butadiene rubber (E-NBR), or emulsion-polymerized chloroprene. E-SBR is preferred in view of wet-grip properties, abrasion resistance, flex fatigue resistance, and durability.

The emulsion-polymerized rubber is synthesized by known emulsion polymerization techniques. For example, it is suitably produced by a method including the steps of emulsifying a radical polymerizable monomer in water with an aid of an emulsifier and adding a radical initiator to the resulting emulsion to cause radical polymerization.

Examples of radical polymerizable monomers to be used in the present invention include diene-based monomers and styrene-based monomers. Examples of diene-based monomers include butadiene, isoprene, and myrcene. Examples of styrene-based monomers include styrene, $\alpha$-methylstyrene, and methoxystyrene. The radical polymerizable monomer is preferably a diene-based monomer, more preferably a combination of a diene-based monomer and a styrene-based monomer, as these monomers provide better properties when used for tires.

The emulsion can be prepared by a known emulsifying technique using a known emulsifier. The emulsion polymerization can be performed by a known method using a known radical polymerization initiator. The temperature for the emulsion polymerization may be suitably adjusted according to the radical initiator to be used and is preferably 0°C to 50°C, more preferably 0°C to 20°C.

The emulsion polymerization can be terminated by adding a known polymerization terminator to the polymerization system, thereby providing rubber latex in which the rubber component is dispersed.

The emulsion-polymerized rubber in the present invention may also be a modified emulsion-polymerized rubber that is obtained by emulsion-polymerizing a radical polymerizable monomer in the presence of a polar functional group-containing thiol compound, and has a polar functional group at a chain terminal. Specific examples of the modified emulsion-polymerized rubber in the present invention include modified emulsion-polymerized styrene-butadiene rubber (modified E-SBR), modified emulsion-polymerized acrylonitrile butadiene rubber (modified E-NBR), and modified emulsion-polymerized chloroprene. Modified E-SBR is preferred in view of wet-grip properties and abrasion resistance.

The modified emulsion-polymerized rubber can be prepared by, for example, emulsion-polymerizing a radical polymerizable monomer in the presence of a polar functional group-containing thiol compound to provide a polymer, and adjusting the acetone extractable content or the soap content and the organic acid content in the polymer.

The thiol hydrogen atom of the polar functional group-containing thiol compound is abstracted to generate a radical during the polymer synthesis. Thus, the polar functional group-containing thiol compound can function as a molecular weight regulator (chain transfer agent) in the same manner as a usual molecular weight regulator such as tert-dodecyl mercaptan. Also, the radical generated from the polar functional group-containing thiol compound reacts with a radical polymerizable monomer to initiate a chain reaction. Thus, a polar functional group in the polar functional group-containing thiol compound is introduced into the starting terminal of a diene-based polymer. An emulsion-polymerized rubber having a polar functional group at a chain terminal can be obtained through emulsion polymerization which is a versatile polymerization method.

The polar functional group-containing thiol compound may be any compound having a polar functional group (-X) and a thiol group (-SH). Examples include compounds represented by Formula (1):

$$X\text{-}R^1\text{-}SH \qquad (1)$$

wherein X represents an ester group, a hydroxyl group (-OH), a carboxyl group (-COOH), an amino group, or an alkoxysilyl group; and $R^1$ represents an optionally substituted alkylene group or arylene group.

The alkylene group for $R^1$ may be linear, branched, or cyclic. Examples of linear alkylene groups include methylene, ethylene, n-propylene, n-butylene, n-pentylene, and n-hexylene groups. Examples of branched alkylene groups include isopropylene and 2-ethylhexylene groups. Examples of cyclic alkylene groups include cyclopropylene and cyclobutylene groups. The alkylene group may be substituted. The alkylene group preferably contains 1 to 20 carbon atoms, more preferably 2 to 18 carbon atoms to better achieve the effects of the present invention.

Examples of the arylene group for $R^1$ include phenylene, tolylene, xylene, naphthylene, and biphenylene groups. The arylene group may be substituted.

Examples of the ester group for X include groups represented by Formula (2-1):

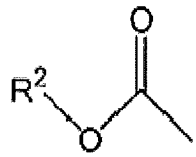

(2-1)

wherein $R^2$ represents an alkyl group or an aryl group; or Formula (2-2) :

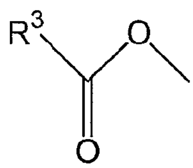

(2-2)

wherein $R^3$ represents a hydrogen atom, an alkyl group, or an aryl group.

The alkyl group for $R^2$ or $R^3$ may be linear, branched, or cyclic. Examples of linear alkyl groups include methyl, ethyl, n-propyl, n-butyl, n-pentyl, and n-hexyl. Examples of branched alkyl groups include isopropyl, isobutyl, and 2-ethylhexyl. Examples of cyclic alkyl groups include cyclopropyl and cyclobutyl. The alkyl group may be substituted.

The alkyl group preferably contains 1 to 20 carbon atoms, more preferably 2 to 18 carbon atoms to better achieve the effects of the present invention.

Examples of the aryl group for $R^2$ or $R^3$ include phenyl, tolyl, xylyl, naphthyl, and biphenyl. Those in which a hydrogen atom is replaced with a substituent may also be used as the aryl group.

Examples of the amino group for X include groups represented by Formula (3):

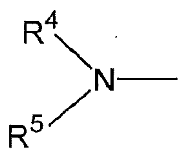

(3)

wherein $R^4$ and $R^5$ each represent a hydrogen atom, an alkyl group, or an aryl group; and $R^4$ and $R^5$ may be joined together to form a ring structure.

Examples of the alkyl group or aryl group for $R^4$ or $R^5$ include those mentioned as examples for $R^2$ or $R^3$. Examples of the ring structure formed by $R^4$ and $R^5$ include a pyrrole ring formed by $R^4$ and $R^5$ together with N in Formula (3). In view of better achieving the effects of the present invention, the alkyl group preferably contains 1 to 12 carbon atoms, more preferably 1 to 4 carbon atoms, and the aryl group preferably contains 6 to 18 carbon atoms, more preferably 6 to 8 carbon atoms.

Examples of the alkoxysilyl group for X include groups represented by Formula (4):

$$(R^6O)_p(R^7)_{3-p}Si - \qquad (4)$$

wherein $R^6$ represents an alkyl group; $R^7$ represents a hydrogen atom or an alkyl group; and p represents an integer of 1 to 3.

Examples of the alkyl group for $R^6$ or $R^7$ include those mentioned as examples for $R^2$ or $R^3$. The alkyl group preferably contains 1 to 12 carbon atoms, more preferably 1 to 4 carbon atoms to better achieve the effects of the present invention.

Specific examples of the compound represented by Formula (1) include: compounds in which X is an ester group, such as 2-ethylhexyl mercaptopropionate and 2-mercaptoethyl octanoate; compounds in which X is a hydroxyl group, such as 9-mercapto-1-nonanol and 11-mercapto-1-undecanol; compounds in which X is a carboxyl group, such as 11-mercaptoundecanoic acid and 16-mercaptohexadecanoic acid; compounds in which X is an amino group, such as 11-amino-1-undecanethiol and 1H-pyrrole-1-undecanethiol; and compounds in which X is an alkoxysilyl group, such as 3-mercaptopropyltriethoxysilane and 3-mercaptopropyl(dimethoxy)methylsilane.

The modified emulsion-polymerized rubber is preferably a polymer prepared by polymerizing a diene-based monomer and a styrene-based monomer together with a polar functional group-containing monomer as radical polymerizable monomers. This enables production of a diene-based polymer having polar functional groups in a main chain and at a chain terminal, thereby providing a diene-based polymer having higher performance.

Preferable examples of the polar functional group-containing monomer include monomers having a polar functional group and a polymerizable unsaturated bond. Examples of the polar functional group include an ester group, a hydroxyl group, a carboxyl group, an amino group, and an alkoxysilyl group. In view of better achieving the effects of the present invention, the polar functional group is preferably an ester group, a carboxyl group, or an amino group. Specific examples of the polar functional group-containing monomer include 2-(dimethylamino)ethyl acrylate, 2-hydroxyethyl acrylate, and N-(2-hydroxyethyl)acrylamide.

The modified emulsion-polymerized rubber is synthesized by emulsion polymerization. For example, it is suitably produced by a method including the steps of emulsifying a radical polymerizable monomer in water with the aid of an emulsifier in the presence of a polar functional group-containing thiol compound, and adding a radical initiator to the resulting emulsion to cause radical polymerization.

The emulsion can be prepared by a known emulsifying technique using a known emulsifier. The emulsifier may be any known emulsifier, and examples thereof include anionic surfactants such as fatty acid salts (fatty acid soaps), rosin acid salts (resin acid soaps), sodium lauryl sulfate, and sodium dodecylbenzene sulfonate; and nonionic surfactants such as polyoxyethylene alkyl ether. Examples of fatty acid salts or rosin acid salts include potassium salts or sodium salts of capric acid, lauric acid, myristic acid, oleic acid, or the like, and disproportionated potassium rosinate.

The emulsion polymerization for the modified emulsion-polymerized rubber can be performed by a known method using a radical polymerization initiator. The radical polymerization initiator may be any known initiator, and examples thereof include redox initiators such as paramenthane hydroperoxide, and persulfates such as ammonium persulfate.

The emulsion polymerization for the modified emulsion-polymerized rubber is terminated by adding a polymerization terminator to the polymerization system. The polymerization terminator may be any known terminator, and examples thereof include N,N'-dimethyldithiocarbamate, diethylhydroxylamine, and hydroquinone.

The rubber composition in the present invention can be prepared as follows: the rubber latex and a carbon black dispersion described later are mixed and coagulated, and the soap component and the organic acid component in the rubber coagulum are removed to prepare a wet masterbatch that has an acetone extractable content of at most 2.5% by mass, or a wet masterbatch that has a soap content of at most 2.5% by mass and an organic acid content of at most 2.5% by mass. The rubber composition in the present invention can be prepared from the wet masterbatch. Alternatively, the rubber composition in the present invention can be prepared as follows: the rubber latex is coagulated to prepare an emulsion-polymerized rubber, and the soap component and the organic acid component in the emulsion-polymerized rubber are removed to prepare a highly purified rubber that has an acetone extractable content of at most 2.5% by mass, or a highly purified rubber that has a soap content of at most 2.5% by mass and an organic acid content of at most 2.5% by mass. The highly purified rubber is kneaded with carbon black to prepare a masterbatch, and the rubber composition in the present invention is prepared from the masterbatch. In particular, the use of the wet masterbatch markedly improves various properties.

The emulsion-polymerized rubber used in the first aspect of the present invention is prepared by removing or reducing the acetone extractable content determined by an acetone extraction method to at most 2.5% by mass. If the content is more than 2.5% by mass, the effect of improving the properties may not be sufficiently achieved. Agents for emulsion polymerization include those which inhibit physical properties, such as fatty acid soap, and those which positively affect physical properties, such as potassium rosinate. Thus, in order to remove a certain amount of agents inhibiting

physical properties and leaving a certain amount of agents positively affecting physical properties, the acetone extractable content is preferably 0.1 to 2.5% by mass, more preferably 0.5 to 2.5% by mass.

The acetone extractable content in the emulsion-polymerized rubber refers the amount (%) of acetone extractables when determined by an acetone extraction method in conformity with JIS K 6350. In the case where the rubber component contains an oil-extended polymer (OEP) that contains oil, the oil is extractable from the rubber component with acetone, but the oil is not intended to be included in the acetone extractable content.

The emulsion-polymerized rubber having a reduced acetone extractable content can be prepared by, for example, repeating a series of operations that include dissolving the rubber produced by emulsion polymerization in an organic solvent such as toluene, filtering the solution, and precipitating the rubber with an alcohol such as methanol, to extract components including agents for emulsion polymerization.

Specific examples of the agents for emulsion polymerization included in the acetone extractable content include emulsifiers, polymerization initiators, polymerization modifiers (reaction chain transfer agents), pH adjusters, and polymerization terminators, which are extractable with acetone.

The amount of emulsifier is the highest among the agents for emulsion polymerization, and thus the emulsifier is considered to have the largest influence on the physical properties of the rubber composition. Examples of the emulsifier include soaps of higher fatty acids, soaps of organic acids contained in rosin, and combinations of these soaps (mixed soaps) .

Examples of the polymerization initiator for hot rubber include potassium persulfate, and examples thereof for cold rubber include redox-type polymerization initiators using an oxidizing agent and a reducing agent.

The polymerization modifier functions as a molecular weight regulator. Examples thereof for hot rubber include n-dodecyl mercaptan, and examples thereof for cold rubber include tertiary dodecyl mercaptan and mixed tertiary mercaptan (mixture of those having 14, 16 or 18 carbon atoms).

The pH adjuster refers to a buffer for adjusting pH or an electrolyte component used to prevent gelation of latex by reducing the viscosity of the latex. Examples of the pH adjuster include caustic alkali, sodium phosphate, and potassium sulfate.

Examples of the polymerization terminator include tertiary butylhydroquinone, dinitrochlorobenzene, hydroquinone with water, dimethyldithiocarbamate, sodium polysulfide, and polyethylene polyamine.

The emulsion-polymerized rubber used in the second aspect of the present invention is prepared by removing or reducing the soap content and the organic acid content each to at most 2.5% by mass. If the amount is more than 2.5% by mass, the effect of improving the properties may not be sufficiently achieved. As described above, to remove a certain amount of agents inhibiting physical properties in the soap component and the organic acid component, and also to leave a certain amount of agents positively affecting physical properties, the soap content and the organic acid content are each preferably 0.1 to 2.5% by mass, more preferably 0.5 to 2.5% by mass.

The soap content and the organic acid content in the emulsion-polymerized rubber respectively refer to the amounts (%) of the soap component and of the organic acid component determined by the method of measuring the soap component or the organic acid component according to JIS K 6237.

The emulsion-polymerized rubber having a reduced soap content and a reduced organic acid content can be prepared by, for example, repeatedly washing an emulsion-polymerized rubber with an aqueous solution of an alkaline compound (basic compound) . The basic compound may be an inorganic compound or an organic compound, but is preferably an inorganic basic compound. Examples of the inorganic basic compound include alkaline metal compounds such as sodium carbonate, sodium hydrogen carbonate, potassium carbonate, sodium hydroxide, or potassium hydroxide. Examples of the organic basic compound include amines such as triethylamine. Each of these may be used alone, or two or more thereof may be used in combination.

The soap component and the organic acid component in the rubber are not single chemical substances. Examples of the soap component include sodium salts, calcium salts, and potassium salts of higher fatty acids or organic acids contained in rosin, such as sodium stearate, sodium rosinate, potassium stearate, or potassium rosinate. Examples of the organic acid component include higher fatty acids and organic acids contained in rosin, such as stearic acid or rosin acid.

The emulsion-polymerized rubber has a peak top molecular weight (Mp) of preferably 150000 or higher, more preferably 200000 or higher, still more preferably 250000 or higher, and also preferably 1000000 or lower, more preferably 900000 or lower. If the emulsion-polymerized rubber has an Mp of lower than the minimum value, a good balance of fuel economy, abrasion resistance, flex fatigue resistance, and durability may not be obtained. If the emulsion-polymerized rubber has an Mp of higher than the maximum value, the processability may deteriorate.

The emulsion-polymerized rubber has a molecular weight distribution, a ratio of weight average molecular weight (Mw) /number average molecular weight (Mn), of preferably 2.5 or more, more preferably 3 or more, and also preferably 6 or less, more preferably 5 or less. If the emulsion-polymerized rubber has an Mw/Mn ratio of less than the minimum value, the processability -may deteriorate. If the emulsion-polymerized rubber has an Mw/Mn ratio of more than the maximum value, a good balance of fuel economy, abrasion resistance, wet-grip performance, flex fatigue resistance, and durability

may not be obtained.

If the emulsion-polymerized rubber is the modified emulsion-polymerized rubber, it has a peak top molecular weight (Mp) of preferably 150000 or higher, more preferably 200000 or higher, and also preferably 500000 or lower, more preferably 450000 or lower.

If the emulsion-polymerized rubber is the modified emulsion-polymerized rubber, it has a molecular weight distribution (Mw/Mn ratio) of preferably 3 or more, more preferably 3.5 or more, still more preferably 4 or more, and also preferably 6 or less, more preferably 5 or less.

The Mp and Mw/Mn ratio of the emulsion-polymerized rubber can be determined by methods described in the examples below.

Regarding the emulsion-polymerized rubber to be used for treads, the amount of the emulsion-polymerized rubber based on 100% by mass of the rubber component is preferably 5% by mass or more, more preferably 15% by mass or more, still more preferably 20% by mass or more, particularly preferably 40% by mass or more. If the amount is less than 5% by mass, the effect produced by adding the emulsion-polymerized rubber tends to be insufficient. The maximum amount of the emulsion-polymerized rubber is not particularly limited and is preferably 90% by mass or less, more preferably 80% by mass or less.

In the case of the emulsion-polymerized rubber having an Mp of 250000 or higher and an Mw/Mn ratio of 3 or more, the minimum amount of the emulsion-polymerized rubber is preferably 5% by mass or more, more preferably 15% by mass or more, and the maximum amount thereof is preferably 60% by mass or less, more preferably 40% by mass or less. If the emulsion-polymerized rubber is the modified emulsion-polymerized rubber, the minimum amount thereof is preferably 30% by mass or more, more preferably 50% by mass or more, and the maximum amount thereof is preferably 90% by mass or less, more preferably 80% by mass or less. In the case of using fine particle carbon black which will be described later, the minimum amount of the emulsion-polymerized rubber is preferably 5% by mass or more, more preferably 15% by mass or more. In the case of containing a solution-polymerized styrene-butadiene rubber which will be described later, the maximum amount of the emulsion-polymerized rubber is preferably 90% by mass or less, more preferably 70% by mass or less, still more preferably 60% by mass or less.

If the emulsion-polymerized rubber is the modified emulsion-polymerized rubber, the amount of a diene-based monomer in the modified emulsion-polymerized rubber is not particularly limited and may be appropriately adjusted according to the amounts of other components. The amount of a diene-based monomer is preferably 50% by mass or more, more preferably 55% by mass or more, and is preferably 90% by mass or less, more preferably 80% by mass or less. If the amount is within the above range, the effects of the present invention can be well achieved.

In the case of the modified emulsion-polymerized rubber containing a styrene-based monomer, the amount of styrene-based monomer in the modified emulsion-polymerized rubber is preferably 10% by mass or more, more preferably 20% by mass or more, and is also preferably 50% by mass or less, more preferably 45% by mass or less. If the amount is outside the above range, tires formed using the rubber may not achieve a balanced improvement in fuel economy, abrasion resistance, and wet-grip performance.

In the case of the modified emulsion-polymerized rubber containing a polar functional group-containing monomer, the amount of polar functional group-containing monomer in the modified emulsion-polymerized rubber is preferably 0.001% by mass or more, more preferably 0.01% by mass or more, and is also preferably 20% by mass or less, more preferably 10% by mass or less. If the amount is outside the above range, tires formed using the rubber may not achieve a balanced improvement in fuel economy, abrasion resistance, and wet-grip performance.

The amounts of the diene-based monomer, styrene-based monomer, and polar functional group-containing monomer in the modified emulsion-polymerized rubber can be determined by methods described in the examples below.

Regarding the emulsion-polymerized rubber to be used for sidewalls, the amount of the emulsion-polymerized rubber based on 100% by mass of the rubber component is preferably 10% by mass or more, more preferably 20% by mass or more. If the amount is less than 10% by mass, the effect produced by adding the emulsion-polymerized rubber tends to be insufficient. The maximum amount of the emulsion-polymerized rubber is not particularly limited and is preferably 70% by mass or less, more preferably 50% by mass or less.

Regarding the emulsion-polymerized rubber to be used for tire internal components, the amount of the emulsion-polymerized rubber based on 100% by mass of the rubber component is preferably 10% by mass or more, more preferably 20% by mass or more. If the amount is less than 10% by mass, the effect produced by adding the emulsion-polymerized rubber tends to be insufficient. The maximum amount of the emulsion-polymerized rubber is not particularly limited and is preferably 70% by mass or less, more preferably 50% by mass or less.

The rubber component of the rubber composition in the present invention may contain one or more kinds of the emulsion-polymerized rubber optionally blended with another synthetic rubber such as solution-polymerized rubber, or natural rubber (NR). Emulsion-polymerized rubber is more preferred than solution-polymerized rubber in view of tensile strength, abrasion resistance, and durability.

Examples of the solution-polymerized rubber include rubber obtained through solution polymerization, such as styrene-butadiene rubber (S-SBR), cis-1,4-polyisoprene, low cis-1,4-polybutadiene, high-cis-1,4-polybutadiene, ethylene-propylene-diene rubber (EPDM), chloroprene rubber (CR), or halogenated butyl rubber (X-IIR) . In view of wet-grip properties, abrasion resistance, and durability, S-SBR, cis-1,4-polyisoprene, low-cis-1,4-polybutadiene, and high-cis-1,4-polybutadiene are preferred, and S-SBR is particularly preferred. The solution-polymerized rubber can be synthesized using a suitable agent for solution polymerization (e.g. organic lithium compound) in a solvent such as a hydrocarbon. Solution polymerization methods are well known to a person skilled in the art.

The effects of the present invention can be well achieved when a solution-polymerized styrene-butadiene rubber (S-SBR) is used as a rubber component together with the emulsion-polymerized rubber. Any S-SBR may be used including known commercial products. One, or two or more kinds of S-SBR may be used.

Any NR may be used including those usually used in the tire industry, such as SIR20, RSS #3, or TSR20.

The amount of S-SBR based on 100% by mass of the rubber component is preferably 20% by mass or more, more preferably 30% by mass or more. If the amount is less than 20% by mass, the effect produced by adding S-SBR is not sufficiently exerted. The amount of S-SBR is preferably 70% by mass or less, more preferably 60% by mass or less. If the amount is more than 70% by mass, the effect produced by using the emulsion-polymerized rubber is not sufficiently exerted.

Regarding the emulsion-polymerized rubber to be used for treads, the proportion of the blended solution-polymerized rubber based on 100% by mass of the total rubber component is preferably 50% by mass or less, more preferably 30% by mass or less, still more preferably 20% by mass or less, particularly preferably 10% by mass or less with the minimum of preferably 5% by mass or more for sufficiently obtaining the effect produced by using the emulsion-polymerized rubber. If NR is blended, the minimum proportion of NR is preferably 5% by mass or more, more preferably 10% by mass or more, still more preferably 20% by mass or more, particularly preferably 40% by mass or more, and the maximum proportion of NR is preferably 90% by mass or less, more preferably 80% by mass or less, still more preferably 50% by mass or less, further preferably 30% by mass or less.

In the case of the emulsion-polymerized rubber having an Mp of 250000 or higher and an Mw/Mn ratio of 3 or more, the minimum proportion of NR is preferably 20% by mass or more, more preferably 40% by mass or more, and the maximum proportion is preferably 90% by mass or less, more preferably 80% by mass or less. Moreover, in the case of using fine particle carbon black as described later, the minimum proportion of NR is preferably 20% by mass or more, more preferably 40% by mass or more, and the maximum proportion of NR is preferably 90% by mass or less, more preferably 80% by mass or less.

Regarding the emulsion-polymerized rubber to be used for sidewalls, BR is preferably used as another synthetic rubber in view of flex fatigue resistance. Any BR may be used including, for example, BR with high-cis content, BR containing syndiotactic polybutadiene crystals, or the like. BR having a cis content of 90% by mass or more is preferred because such a BR provides excellent flex fatigue resistance.

Regarding the emulsion-polymerized rubber to be used for sidewalls, the amount of BR based on 100% by mass of the rubber component is preferably 10% by mass or more, more preferably 20% by mass or more. If the amount is less than 10% by mass, sufficient flex fatigue resistance may not be obtained. The amount of BR is preferably 70% by mass or less, more preferably 50% by mass or less. If the amount is more than 70% by mass, the mechanical strength is insufficient, and also the processability may deteriorate.

Regarding the emulsion-polymerized rubber to be used for sidewalls, the amount of NR based on 100% by mass of the rubber component is preferably 20% by mass or more, more preferably 30% by mass or more. If the amount is less than 20% by mass, the rubber strength tends to decrease. The amount of NR is preferably 80% by mass or less, more preferably 60% by mass or less. If the amount is more than 80% by mass, sufficient flex fatigue resistance may not be obtained.

Regarding the emulsion-polymerized rubber to be used for tire internal components, the proportion of the blended solution-polymerized rubber based on 100% by mass of the total rubber component is preferably 20% by mass or less, more preferably 10% by mass or less with the minimum of preferably 5% by mass or more for sufficiently obtaining the effect produced by using the emulsion-polymerized rubber. If NR is blended, the minimum proportion of NR is preferably 20% by mass or more, more preferably 40% by mass or more, and the maximum proportion of NR is preferably 90% by mass or less, more preferably 80% by mass or less.

Carbon black is contained in the present invention. The emulsion-polymerized rubber containing carbon black can effectively produce a reinforcing effect and, as a result, the effects of the present invention can be well achieved. Any carbon black may be used, and preferable examples include SAF, ISAF, and HAF. Fine particle carbon black is preferred for the rubber composition for treads.

The use of a carbon black dispersion as a carbon black source together with a rubber latex as a rubber source provides good processability and synergistically improves the balance of wet-grip performance, fuel economy, abrasion resistance, flex fatigue resistance, and durability, with the result that the effects of the present invention can be remarkably achieved. Furthermore, this mode can improve the balance of the above properties more efficiently than the mode of using a silica dispersion instead of a carbon black dispersion together with a rubber latex as above.

Regarding the emulsion-polymerized rubber to be used for treads, the carbon black has a nitrogen adsorption

specific surface area ($N_2SA$) of preferably 80 $m^2/g$ or more, more preferably 100 $m^2/g$ or more. Carbon black having an $N_2SA$ of less than 80 $m^2/g$ has a small reinforcing effect and tends not to sufficiently improve the abrasion resistance. The carbon black has an $N_2SA$ of preferably 200 $m^2/g$ or less, more preferably 150 $m^2/g$ or less. Carbon black having an $N_2SA$ of more than 200 $m^2/g$ is not readily dispersed and tends to reduce fuel economy. In the case of using fine particle carbon black, the maximum nitrogen adsorption specific surface area ($N_2SA$) of fine particle carbon black is preferably 120 $m^2/g$ or more, more preferably 150 $m^2/g$ or more, still more preferably 160 $m^2/g$ or more, and the minimum $N_2SA$ thereof is preferably 300 $m^2/g$ or less, more preferably 200 $m^2/g$ or less.

The $N_2SA$ of carbon black can be measured in conformity with JIS K 6217-2:2001.

Regarding the emulsion-polymerized rubber to be used for treads, the amount of carbon black relative to 100 parts by mass of the rubber component is preferably 5 parts by mass or more, more preferably 25 parts by mass or more. If the amount is less than 5 parts by mass, sufficient abrasion resistance tends not to be obtained. The amount of carbon black is preferably 100 parts by mass or less, more preferably 60 parts by mass or less. If the amount is more than 100 parts by mass, the carbon black is not readily dispersed, which tends to reduce the fuel economy.

Regarding the emulsion-polymerized rubber to be used for sidewalls, the carbon black has a nitrogen adsorption specific surface area ($N_2SA$) of preferably 30 $m^2/g$ or more, more preferably 35 $m^2/g$ or more. Carbon black having an $N_2SA$ of less than 30 $m^2/g$ may fail to provide sufficient mechanical strength. The carbon black has a nitrogen adsorption specific surface area of preferably 80 $m^2/g$ or less, more preferably 60 $m^2/g$ or less. Carbon black having an $N_2SA$ of more than 80 $m^2/g$ leads to excessive heat build-up, and the flex fatigue resistance may be reduced.

Regarding the emulsion-polymerized rubber to be used for sidewalls, the amount of carbon black relative to 100 parts by mass of the rubber component is preferably 5 parts by mass or more, more preferably 20 parts by mass or more. If the amount is less than 5 parts by mass, sufficient flex fatigue resistance tends not to be obtained. The amount of carbon black is preferably 100 parts by mass or less, more preferably 60 parts by mass or less. If the amount is more than 100 parts by mass, carbon black is not readily dispersed, which tends to reduce the fuel economy.

Regarding the emulsion-polymerized rubber to be used for tire internal components, the carbon black has a nitrogen adsorption specific surface area ($N_2SA$) of preferably 30 $m^2/g$ or more, more preferably 35 $m^2/g$ or more. Carbon black having a $N_2SA$ of less than 30 $m^2/g$ has a small reinforcing effect and tends not to sufficiently improve the durability. The carbon black has an $N_2SA$ of preferably 100 $m^2/g$ or less, more preferably 80 $m^2/g$ or less. Carbon black having an $N_2SA$ of more than 100 $m^2/g$ is not readily dispersed, which tends to reduce the fuel economy.

Regarding the emulsion-polymerized rubber to be used for tire internal components, the amount of carbon black relative to 100 parts by mass of the rubber component is preferably 5 parts by mass or more, more preferably 20 parts by mass or more. If the amount is less than 5 parts by mass, sufficient durability tends not to be obtained. The amount of carbon black is preferably 100 parts by mass or less, more preferably 60 parts by mass or less. If the amount is more than 100 parts by mass, the carbon black is not readily dispersed, which tends to reduce the fuel economy.

Silica is contained in the present invention. The emulsion-polymerized rubber enhances the dispersion of silica, further enhancing the effect of improving the fuel economy, wet-grip performance, abrasion resistance, flex fatigue resistance, and durability. In particular, the emulsion-polymerized rubber containing both fillers of carbon black and silica provides good processability and synergistically improves the wet-grip performance, fuel economy, abrasion resistance, flex fatigue resistance, and durability, with the result that the effects of the present invention can be remarkably achieved.

Any silica may be used including those usually used in the tire industry. Preferably, silica is used together with a known silane coupling agent.

The silica has a nitrogen adsorption specific surface area ($N_2SA$) of preferably 100 $m^2/g$ or more, more preferably 150 $m^2/g$ or more. Silica having an $N_2SA$ of less than 100 $m^2/g$ has a small reinforcing effect and tends not to sufficiently improve the abrasion resistance, flex fatigue resistance, and durability. The silica has an $N_2SA$ of preferably 300 $m^2/g$ or less, more preferably 200 $m^2/g$ or less. Silica having an $N_2SA$ of more than 300 $m^2/g$ is not readily dispersed, which tends to reduce the fuel economy.

The nitrogen adsorption specific surface area of silica can be measured by the BET method in conformity with ASTM D3037-81.

Regarding the emulsion-polymerized rubber to be used for treads, the amount of silica relative to 100 parts by mass of the rubber component is preferably 5 parts by mass or more, more preferably 25 parts by mass or more. If the amount is less than 5 parts by mass, sufficient abrasion resistance and fuel economy tend not to be obtained. The amount of silica is preferably 100 parts by mass or less, more preferably 60 parts by mass or less. If the amount is more than 100 parts by mass, the silica is not readily dispersed, which tends to reduce the fuel economy.

Regarding the emulsion-polymerized rubber to be used for treads, the combined amount of carbon black and silica relative to 100 parts by mass of the rubber component is preferably 30 parts by mass or more, more preferably 50 parts by mass or more, and also preferably 120 parts by mass or less, more preferably 80 parts by mass or less. If the combined amount is within the above range, not only good abrasion resistance but also excellent fuel economy can be obtained. Thus, the effects of the present invention can be sufficiently achieved.

Regarding the emulsion-polymerized rubber to be used for treads, the proportion of carbon black based on 100%

by mass in total of carbon black and silica is preferably 5% by mass or more, more preferably 10% by mass or more. The proportion of carbon black is preferably 80% by mass or less, more preferably 70% by mass or less, still more preferably 60% by mass or less. If the proportion is within the above range, not only good abrasion resistance but also excellent fuel economy can be obtained. Thus, the effects of the present invention can be sufficiently achieved.

Regarding the emulsion-polymerized rubber to be used for sidewalls, the amount of silica relative to 100 parts by mass of the rubber component is preferably 5 parts by mass or more, more preferably 20 parts by mass or more. If the amount is less than 5 parts by mass, sufficient flex fatigue resistance tends not to be obtained. The amount of silica is preferably 100 parts by mass or less, more preferably 60 parts by mass or less. If the amount is more than 100 parts by mass, the silica is not readily dispersed, which tends to reduce the fuel economy.

Regarding the emulsion-polymerized rubber to be used for sidewalls, the combined amount of carbon black and silica relative to 100 parts by mass of the rubber component is preferably 20 parts by mass or more, more preferably 30 parts by mass or more, and is also preferably 120 parts by mass or less, more preferably 90 parts by mass or less. If the combined amount is within the above range, not only good flex fatigue resistance but also excellent fuel economy can be obtained. Thus, the effects of the present invention can be sufficiently achieved.

Regarding the emulsion-polymerized rubber to be used for sidewalls, the proportion of carbon black based on 100% by mass in total of carbon black and silica is preferably 30% by mass or more, more preferably 40% by mass or more. The proportion of carbon black is preferably 90% by mass or less, more preferably 80% by mass or less. If the proportion is within the above range, not only good flex fatigue resistance but also excellent fuel economy can be obtained. Thus, the effects of the present invention can be sufficiently achieved.

Regarding the emulsion-polymerized rubber to be used for tire internal components, the amount of silica relative to 100 parts by mass of the rubber component is preferably 5 parts by mass or more, more preferably 25 parts by mass or more. If the amount is less than 5 parts by mass, sufficient durability tends not to be obtained. The amount of silica is preferably 100 parts by mass or less, more preferably 60 parts by mass or less. If the amount is more than 100 parts by mass, the silica is not readily dispersed, which tends to reduce the fuel economy.

Regarding the emulsion-polymerized rubber to be used for tire internal components, the combined amount of carbon black and silica relative to 100 parts by mass of the rubber component is preferably 20 parts by mass or more, more preferably 30 parts by mass or more, and is also preferably 120 parts by mass or less, more preferably 90 parts by mass or less. If the combined amount is within the above range, not only good durability but also excellent fuel economy can be obtained. Thus, the effects of the present invention can be sufficiently achieved.

Regarding the emulsion-polymerized rubber to be used for tire internal components, the proportion of carbon black based on 100% by mass in total of carbon black and silica is preferably 30% by mass or more, more preferably 40% by mass or more. The proportion of carbon black is preferably 90% by mass or less, more preferably 80% by mass or less. If the proportion is within the above range, not only good durability but also excellent fuel economy can be obtained. Thus, the effects of the present invention can be sufficiently achieved.

Preferably, the rubber composition in the present invention contains a silane coupling agent together with silica. Examples of the silane coupling agent include sulfide silane coupling agents, mercapto silane coupling agents, vinyl silane coupling agents, amino silane coupling agents, glycidoxy silane coupling agents, nitro silane coupling agents, and chloro silane coupling agents. Sulfide silane coupling agents are preferred in view of better achieving the effects of the present invention.

In view of better achieving the effects of the present invention, the sulfide silane coupling agents are preferably bis(3-triethoxysilylpropyl)tetrasulfide, bis (2-triethoxysilylethyl)tetrasulfide, bis(3-triethoxysilylpropyl)disulfide, bis (2-triethoxysilylethyl)disulfide, more preferably bis(3-triethoxysilylpropyl)disulfide.

The amount of silane coupling agent relative to 100 parts by mass of silica is preferably 2 parts by mass or more, more preferably 3 parts by mass or more. If the amount is less than 2 parts by mass, the effects of the present invention tend not to be sufficiently achieved. The amount of silane coupling agent is preferably 20 parts by mass or less, more preferably 12 parts by mass or less. If the amount is more than 20 parts by mass, an effect commensurate with the increase in the cost tends not to be obtained.

The rubber composition in the present invention may appropriately contain compounding agents which are commonly used in the tire industry, including oil, zinc oxide, stearic acid, antioxidants, vulcanizing agents such as sulfur, and vulcanization accelerators, in addition to the above materials.

The rubber composition in the present invention can be prepared by a known method. Specifically, it can be prepared by kneading the components using a Banbury mixer, a kneader, an open roll, or the like, and vulcanizing the mixture.

A preferable rubber composition is prepared by Production method 1 including Step 1 of mixing an emulsion-polymerized rubber latex with a carbon black dispersion; Step 2 of coagulating the resulting mixture and adjusting the acetone extractable content determined by an acetone extraction method in the coagulum to at most 2.5% by mass or adjusting the soap content and the organic acid content in the coagulum to at most 2.5% by mass; and Step 3 of kneading an obtained wet masterbatch (WMB) with other components. Alternatively, the rubber composition in the present invention

can also be prepared by Production method 2 including Step I of adjusting the acetone extractable content in the emulsion-polymerized rubber to at most 2.5% by mass or adjusting the soap content and the organic acid content in the emulsion-polymerized rubber to at most 2.5% by mass; Step II of kneading an obtained highly purified rubber with carbon black to prepare a masterbatch (MB); and Step III of kneading the masterbatch with other components. Such methods allow carbon black to be highly dispersed and therefore the effects of the present invention can be remarkably achieved.

Production method 1 is preferred. The rubber composition prepared by this method achieves good processability and also synergistically improves the balance of wet-grip performance, fuel economy, abrasion resistance, flex fatigue resistance, and durability, with the result that the effects of the present invention can be remarkably achieved. Furthermore, this mode can improve the balance of the above properties more efficiently than the mode of using a silica dispersion instead of a carbon black dispersion.

In Production method 1, the concentration of the rubber component (solid rubber) in the emulsion-polymerized rubber latex is not particularly limited. The maximum concentration of the rubber component is preferably 10% by mass or more, more preferably 20% by mass or more, still more preferably 30% by mass or more, and the maximum concentration is preferably 80% by mass or less, more preferably 60% by mass or less, in view of uniform dispersion of the rubber component in the latex (100% by mass) .

Examples of the carbon black dispersion in Production method 1 include a dispersion prepared by dispersing the carbon black in an aqueous medium. Such a carbon black dispersion allows carbon black to be mixed with rubber molecules in liquid state, so that carbon black can be sufficiently dispersed.

The carbon black dispersion can be prepared by a known method using, for example, a high-pressure homogenizer, an ultrasonic homogenizer, or a colloid mill. Specifically, the dispersion can be prepared by adding carbon black to an aqueous medium placed in a colloid mill with stirring, and circulating the mixture optionally together with a surfactant using a homogenizer. The concentration of carbon black in the dispersion is not particularly limited, but is preferably 0.5 to 10% by mass, more preferably 3 to 7% by mass in view of uniform dispersion of carbon black in the dispersion (100% by mass).

The carbon black dispersion may appropriately contain a surfactant in view of dispersion. Any surfactant may be appropriately used, including known anionic surfactants, nonionic surfactants, amphoteric surfactant, or the like. The amount of surfactant to be added in the dispersion is not particularly limited and is preferably 0.01 to 3% by mass, more preferably 0.05 to 1% by mass in view of uniform dispersion of the filler in the dispersion (100% by mass).

Examples of the aqueous medium include water and alcohol. Water is preferred.

The WMB can be prepared in Steps 1 and 2 of Production method 1 specifically as follows: the emulsion-polymerized rubber latex is mixed with the carbon black dispersion to prepare a mixture; the mixture is coagulated, and the soap component and the organic acid component (acetone extractables) in the rubber in the coagulum are removed so that the acetone extractable content is adjusted to at most 2.5% by mass or the soap content and the organic acid content are adjusted to at most 2.5% by mass; and the resulting product is dried.

The emulsion-polymerized rubber latex may be mixed with the carbon black dispersion by any method, for example, by dropwise adding the carbon black dispersion with stirring to the emulsion-polymerized rubber latex placed in a blender mill. The coagulation step is usually performed by addition of a coagulant, for example, an acidic compound such as formic acid or sulfuric acid, or a salt such as sodium chloride. The step of removing the soap component and the organic acid component (acetone extractables) can be performed, for example, by repeating a series of operation of dissolving the coagulum in an organic solvent and precipitating with an alcohol, or by repeatedly washing the coagulum with an aqueous solution of an alkaline compound. The resulting product after the removal is dried to give a WMB. A known dryer such as an air dryer may be used for the drying. The amount of carbon black in the WMB may be appropriately determined depending on a desired rubber composition to be prepared and the mixing properties.

In Step 3, the WMB obtained in Step 2 is mixed with other components by a known method, and the kneaded product is vulcanized so that a rubber composition with excellent properties can be prepared.

Examples of the emulsion-polymerized rubber to be used in Step I of Production method 2 include solid rubber (coagulated rubber prepared by coagulating an emulsion-polymerized rubber latex).

The MB can be prepared in Steps I and II of Production method 2 specifically as follows: the soap component and the organic acid component (acetone extractables) in the solid rubber are removed to adjust the acetone extractable content to at most 2.5% by mass or adjust the soap content and the organic acid content to at most 2.5% by mass; the resulting highly purified rubber is mixed with the carbon black to prepare a mixture; and the mixture is dried. The removal of the soap component and the organic acid component (acetone extractables) and drying of the mixture can be performed in the same manner as described above. The step of mixing the highly purified rubber with the carbon black can be performed by a conventional kneading method.

In Step III, the MB obtained in Step II is mixed with other components by a known method, and the kneaded product is vulcanized so that a rubber composition with excellent properties can be prepared.

The rubber composition in the present invention prepared in Production method 1 or 2 can be suitably used for treads, sidewalls, or tire internal components of tires. Examples of the tire internal components include carcass plies, base

treads, breakers, sidewalls, clinch apexes, and bead apexes. The rubber composition is especially preferably used for carcass plies.

The pneumatic tire of the present invention can be formed from the rubber composition by a usual method.

Specifically, the rubber composition containing the components mentioned above, before vulcanization, is extruded and processed into the shape of a tread, a sidewall, or a tire internal component and then molded together with other tire components in a usual manner in a tire building machine to produce an unvulcanized tire. The unvulcanized tire is heated and pressurized in a vulcanizer to provide a pneumatic tire.

[Rubber masterbatch]

Next, the rubber masterbatch and a method of producing the rubber masterbatch according to the third aspect of the present invention will be described.

The rubber masterbatch according to the third aspect of the present invention includes a rubber component derived from an emulsion-polymerized rubber latex, and carbon black. The rubber masterbatch has an organic acid content of at most 2.0% by mass based on total solids of the rubber masterbatch.

A rubber masterbatch prepared by a wet masterbatch method is excellent in dispersion of reinforcing agents such as silica or carbon black but may fail to exert its original excellent properties, including mechanical strength, abrasion resistance, and flex crack resistance. In particular, as compared to a rubber masterbatch containing silica, a rubber masterbatch containing carbon black is proven to be insufficient in terms of mechanical strength, abrasion resistance, flex crack resistance, or other properties depending on the kinds of materials and preparation conditions.

The present inventors have found that the above problem is caused as follows: a component contained as a stabilizer in an emulsion-polymerized rubber latex is chemically changed during the subsequent preparation of a wet masterbatch with carbon black, and the resulting component remains as an organic acid in the rubber masterbatch, which interacts with the surface of carbon black, resulting in insufficient mechanical strength, abrasion resistance, flex crack resistance, and the like. The present inventors successfully solve the above problem by controlling the organic acid content in the rubber masterbatch.

Thus, the carbon black-containing masterbatch of the present invention which is prepared by a wet masterbatch method allows carbon black to be well dispersed and to exhibit the performance of carbon black as an enforcing agent, such as mechanical strength, abrasion resistance, and flex crack resistance. Such a masterbatch can be suitably used for automobile tires or the like.

Specifically, emulsion-polymerized rubber latex for use as a material of rubber masterbatches contains emulsifiers (surfactants such as a soap component) and the like used as stabilizers for latex in the production of the emulsion-polymerized rubber latex. Thus, a rubber masterbatch, which is prepared by mixing such emulsion-polymerized rubber latex with a carbon black dispersion, coagulating the mixture with an acid, and separating the solid and the liquid, contains various foreign substances including the emulsifiers from the rubber latex.

The present inventors have focused on the influence of the residual emulsifier as a cause that prevents a carbon black-containing rubber masterbatch prepared by a wet masterbatch method from exerting its original excellent properties, as described below.

Specifically, the emulsifier contained in the emulsion-polymerized rubber latex can be converted to various organic acids under acidic conditions during the acid coagulation with a carbon black dispersion. Specific examples of such organic acids include resin acids such as abietic acid and fatty acids such as oleic acid. The generated organic acids partially interact with functional groups on the surface of carbon black through, for example, chemical bonding or physical adsorption. This interaction seems to interfere with the interaction between the rubber formed from the latex and carbon black. Thus, the drawback of a high organic acid content in the rubber masterbatch is considered to be prominent particularly when the reinforcing material used is carbon black that is highly hydrophobic but has a hydrophilic group only at an end of the graphite structure.

The emulsifier in the rubber masterbatch cannot be readily removed. For example, it is not readily removed sufficiently by washing with water or an organic solvent after the solid-liquid separation. According to the present invention, the organic acid content in the rubber masterbatch can be controlled by optimizing the conditions for preparation of the rubber masterbatch, thereby solving the above problem.

The term "rubber masterbatch" herein refers to a product obtainable by wet-mixing an emulsion-polymerized rubber latex with a carbon black dispersion, and coagulating the mixture of the rubber latex and carbon black. The rubber masterbatch encompasses those obtained before removing the dispersion medium (moisture or the like) from the dispersion, those containing a small amount of dispersion medium after removal thereof, and dried products of these.

Examples of the emulsion-polymerized rubber latex include, but are not limited to, latexes of the above-mentioned rubbers. The emulsion-polymerized rubber latex refers to a dispersion of the rubber particles obtained by emulsion polymerization in a dispersion medium. Emulsion-polymerized SBR latex is especially preferred in view of mechanical strength, abrasion resistance, and flex crack resistance.

The dispersing medium used to disperse the rubber particles of the emulsion-polymerized rubber latex may be any medium, including water and organic solvents such as alcohols, and is usually water. The dispersing medium may also be a mixture of water and a small amount of a water-soluble alcohol or the like.

The emulsion-polymerized rubber latex may contain residues of the emulsifier and stabilizer used for emulsion polymerization, other compounds, or reaction byproducts or residues. Since rubber latex in which particularly the emulsifier is removed or decreased has significantly reduced dispersibility, it is preferred to use a commercially available emulsifier as received. According to the present invention, even when such rubber latex containing a large amount of emulsifier is used, a rubber masterbatch having good mechanical strength, good abrasion resistance, and good flex crack resistance can be obtained.

The emulsifier may be any emulsifier usually used for an emulsion-polymerized rubber latex, and examples thereof include those compounds mentioned above. The amount of the rubber component in the emulsion-polymerized rubber latex is usually 15 to 60% by mass, preferably 15 to 30% by mass. When the emulsion-polymerized rubber latex contains the rubber component at the above proportion, and also contains an emulsifier, a stabilizer, other compounds, and reaction byproducts or residues, its solids content concentration (concentration of components excluding the dispersion medium) is usually adjusted to 20 to 35% by mass. The rubber particles in the emulsion-polymerized rubber latex usually have an average particle size of about 20 to 100 nm.

Materials for the rubber masterbatch of the present invention may include other rubber latex such as natural rubber latex in addition to the emulsion-polymerized rubber latex as described later.

Any carbon black, including those mentioned above, may be used in the rubber masterbatch. Furnace black is preferred for the rubber masterbatch of the present invention. Furnace black is prepared by a furnace method (oil furnace method) described in JP 2004-43598 A, JP 2004-277443 A, or the like.

The carbon black used in the rubber masterbatch has a cetyl trimethyl ammonium bromide (CTAB) adsorption specific surface area (CTAB surface area), measured in conformity with JIS K 6217-3(2008), of usually 60 $m^2/g$ or more, preferably 90 $m^2/g$ or more, more preferably 120 $m^2/g$ or more, still more preferably 150 $m^2/g$ or more, particularly preferably 180 $m^2/g$ or more. Carbon black having not less than the minimum CTAB surface area can reinforce rubber well, so that the rubber masterbatch and a rubber composition formed from the rubber masterbatch tend to have enhanced mechanical strength, abrasion resistance, and flex crack resistance. The maximum CTAB surface area of carbon black is not limited and is usually 400 $m^2/g$ or less.

The carbon black used in the rubber masterbatch has an iodine adsorption (IA) amount, measured in accordance with JIS K 6217-1(2008), of preferably 100 to 400 mg/g, more preferably 160 to 400 mg/g. The carbon black having an IA amount within the above range tends to enhance the abrasion resistance.

The carbon black used in the rubber masterbatch preferably has a surface active index of 0.7 or higher, more preferably 0.8 or higher, still more preferably 0.9 or higher, wherein the surface active index is defined as a ratio (CTAB/IA ratio, $m^2/mg$) of the CTAB surface area ($m^2/g$) to the iodine adsorption amount (mg/g). Carbon black having not lower than the minimum CTAB/IA ratio can reinforce rubber well, so that the rubber masterbatch and a rubber composition formed from the rubber masterbatch tend to have enhanced mechanical strength, abrasion resistance, and flex crack resistance. The maximum CTAB/IA ratio of carbon black is not limited and is usually not higher than 1.5.

The surface activity index defined by the CTAB/IA ratio may be regarded as an index of the degree of crystallinity (degree of graphitization) of carbon black. Specifically, carbon black with a higher CTAB/IA ratio is less crystallized, and tends to interact more with the rubber component (emulsion-polymerized rubber latex).

The CTAB/IA ratio is referenced as a parameter for evaluating the amount of acid functionality on the surface of carbon black. Namely, carbon black with a higher CTAB/IA ratio has a larger amount of acid functionality on its surface. The acid functionality on the surface of carbon black contributes to the dispersibility in water and the interaction with the rubber component (emulsion-polymerized rubber latex) of carbon black.

When carbon black having a CTAB/IA ratio within the above range is used in a conventional masterbatch, the carbon black interacts not only with the rubber component but also strongly with the emulsifier contained in the emulsion-polymerized rubber latex and the organic acid derived from the emulsifier. Thus, the carbon black in a conventional rubber masterbatch prepared by a wet masterbatch method does not sufficiently exert its original performance as a reinforcing agent. In contrast, in the rubber masterbatch of the present invention, the carbon black having a CTAB/IA ratio within the above range can produce a more significant reinforcing effect.

Such carbon black having a CTAB/IA ratio within the above range can be obtained by, for example, a furnace method with selection of a suitable material oil, optimization of combustion conditions, or the like.

The carbon black used in the rubber masterbatch may be acidic, neutral, or basic, but preferably has a pH measured in conformity with JIS K 6221 of preferably 2.0 to 10.0, more preferably 5.5 to 9.5. If the carbon black has a pH within the above range, the rubber masterbatch and a rubber composition formed from the rubber masterbatch of the present invention tend to have enhanced mechanical strength, abrasion resistance, and flex crack resistance.

The carbon black has a primary particle size of usually 10 to 100 nm, particularly preferably 12 to 25 nm. The carbon black usually has a diameter $D_{mod}$ of 25 to 300 nm, particularly preferably 30 to 100 nm.

The rubber masterbatch of the present invention contains a rubber component derived from an emulsion-polymerized rubber latex and carbon black, and has an organic acid content of not more than a predetermined value. Specifically, the organic acid content in the rubber masterbatch of the present invention is 2.0% by mass or less, preferably 1.5% by mass or less, more preferably 1.0% by mass or less, still more preferably 0.8% by mass or less, particularly preferably 0. 6% by mass or less, most preferably 0.4% by mass or less. In the case of the rubber masterbatch containing a dispersion medium such as water, the organic acid content in the rubber masterbatch is based on total solids of the rubber masterbatch. The organic acid content can be calculated by an organic acid analysis method in conformity with JIS K 6237.
When the organic acid content in the rubber masterbatch is adjusted to at most the above maximum amount, the rubber masterbatch and a rubber composition formed from the rubber masterbatch can achieve enhanced mechanical strength, abrasion resistance, and flex crack resistance. The minimum organic acid content in the rubber masterbatch is not limited and may be zero, but is usually 0.01% by mass or more in view of the workload involved in reducing the organic acid content.
The organic acid in the present invention refers to a carboxy group-containing hydrocarbon compound. Specific examples thereof include resin acids and fatty acids. A resin acid refers to an organic carboxyl group-containing compound included in natural resin. Specific examples thereof include diterpene acids such as abietic acid, and aromatic carboxylic acids such as benzoic acid and cinnamic acid. The resin acid in the present invention is not limited to those obtainable from natural resins but may be those having the same chemical structure obtainable from different sources. The fatty acid refers to a carboxylic acid of a long-chain hydrocarbon having 12 or more carbon atoms. Specific examples thereof include oleic acid, linoleic acid, palmitic acid, and myristic acid. Such organic acids are usually converted from emulsifiers derived from emulsion-polymerized rubber latex under acidic conditions. The organic acid in the present invention is not limited to those from the above sources. The organic acid content in the present invention refers to the combined amount of the above compounds.
According to the present invention, the method for adjusting the organic acid content in the rubber masterbatch to the above range is not specifically limited and examples include the methods described below. The step of reducing the organic acid content in the present invention is generally referred to as "organic acid-decreasing step".

(1) A method for organic acid removal including the steps of mixing an emulsion-polymerized rubber latex and a carbon black dispersion, coagulating the mixture, and washing the coagulum with an alkaline solution.
(2) A method for organic acid removal including the steps of mixing an emulsion-polymerized rubber latex and a carbon black dispersion, coagulating the mixture, and washing the coagulum with an organic solvent such as an alcohol, e.g., a water-soluble alcohol, or acetone.
(3) A method for organic acid removal including the steps of mixing an emulsion-polymerized rubber latex and a carbon black dispersion, coagulating the mixture, and repeatedly washing the coagulum with hot water.

The method for organic acid removal including the step of washing the coagulum with an alkaline solution is most preferred. This method is described in detail below.
As described above, the emulsifier in the emulsion-polymerized rubber latex is converted to an organic acid during acid coagulation with a carbon black dispersion. The organic acid derived from an emulsifier is usually a hydrocarbon compound having a relatively long chain. Such an organic acid is poorly soluble in water and is likely to remain in a wet masterbatch. In contrast, if the coagulum is washed with an alkaline solution, the organic acid is converted back to a water-soluble compound (or a compound having a higher solubility in water). The organic acid in this state can be efficiently reduced by washing. In other words, the surface of carbon black having been interacting with the organic acid during the acid coagulation is changed so as to interact with rubber by washing with an alkaline solution.
According to the present invention, the step of washing the coagulum with an alkaline solution (hereinafter, also referred to as "pH-adjusting step") may be performed at any stage in a method for producing a rubber masterbatch described later. Preferably the step is performed after coagulating a mixture of an emulsion-polymerized rubber latex and a carbon black dispersion and removing the dispersion medium. Performing the pH-adjusting step at this stage enables an efficient organic acid removal. Regarding the "removal of a dispersion medium", the coagulum needs not to be completely dried but is preferably allowed to contain a small amount of dispersion medium so as to be subjected to the pH-adjusting step in a wet condition.
The pH adjusting step is not particularly limited as long as the coagulum is washed with an alkaline solution. Specifically, washing with an aqueous alkaline solution is preferred.
The temperature for the pH-adjusting step (i.e. temperature of an alkaline solution) is not limited and is usually 20°C to 90°C, preferably 30°C to 80°C, more preferably 40°C to 75°C, still more preferably 50°C to 70°C, particularly preferably 55°C to 65°C. When the temperature for the pH-adjusting step is set within the above range, the organic acid tends to be efficiently removed.
The pH-adjusting step may be performed once or repeatedly plural times. In the case of repeating the step plural times, a series of operations may be repeated which include washing a coagulum with an alkaline solution, removing the

solution, and further adding an alkaline solution.

The pH value for the pH-adjusting step is not limited. The pH of a dispersion prepared by adding and mixing an alkaline solution to the coagulum is usually 8.0 to 13.5, preferably 8.5 to 13.0, more preferably 9.0 to 12.5, still more preferably 9.5 to 12.0, particularly preferably 10.0 to 11.5. When the pH value for the pH-adjusting step is set within the above range, the organic acid removal and the later-described water-washing step tend to be efficiently performable.

The aqueous alkaline solution suitably used as an alkaline solution in the pH-adjusting step is preferably prepared by dissolving a basic compound in water. The basic compound may be an inorganic compound or an organic compound, and is preferably an inorganic basic compound as it does not cause chemical bonding in a rubber masterbatch. Examples of the inorganic basic compound and organic basic compound include those mentioned above.

The concentration of the basic compound in the aqueous alkaline solution is not particularly limited, and is preferably adjusted such that the aqueous alkaline solution has a pH of 8.0 to 13.5.

The coagulum obtained through the pH-adjusting step is preferably washed with water or warm water (hereinafter, this step is also referred to as water-washing step) until a dispersion of the coagulum has a neutral pH. The temperature for the water washing is not particularly limited and is usually 20°C to 90°C, preferably 30°C to 80°C, more preferably 40°C to 75°C, still more preferably 50°C to 70°C, particularly preferably 55°C to 65°C in view of washing efficiency. The water-washing step may be repeatedly performed plural times.

The rubber masterbatch can be prepared by, for example, the following method.

The rubber masterbatch of the present invention can be obtained by mixing a rubber component derived from an emulsion-polymerized rubber latex with carbon black. Usually, the rubber masterbatch is prepared by mixing an emulsion-polymerized rubber latex with a dispersion of carbon black in a dispersion medium such as water (mixing step), coagulating the mixture (coagulation step), and removing the dispersion medium liquid. Particularly in order to efficiently set the organic acid content in the rubber masterbatch to not more than the above maximum amount, the method for producing the rubber masterbatch preferably includes the above-described pH-adjusting step, preferably the pH-adjusting step and the water-washing step (separation step) in any of the above steps.

The concentration of carbon black in the carbon black dispersion is not limited and is usually 0.5 to 20% by mass, preferably 1 to 15% by mass. Carbon black is usually mixed in an amount of preferably 5 to 100 parts by mass, more preferably 10 to 80 parts by mass, still more preferably 30 to 70 parts by mass relative to 100 parts by mass of the rubber component of the emulsion-polymerized rubber latex. If the concentration of carbon black is less than the minimum amount, the carbon black may fail to sufficiently reinforce the rubber masterbatch. If the concentration of carbon black is more than the maximum amount, the processability may deteriorate.

The carbon black dispersion may be mixed with the emulsion-polymerized rubber latex by any method. For example, the emulsion-polymerized rubber latex may be dropwise added to the carbon black dispersion placed in a mixer, or the carbon black dispersion may be dropwise added to the emulsion-polymerized rubber latex with stirring. Alternatively, for example, a flow of the carbon black dispersion with a certain flow rate and a flow of the emulsion-polymerized rubber latex with a certain flow rate may be mixed under vigorous stirring.

A coagulant is usually used in the coagulation step of coagulating the carbon black and the emulsion-polymerized rubber latex mixed in a liquid phase. The coagulant used in the present invention is not limited, and may be appropriately selected from conventional coagulants. Examples of the coagulant include acidic compounds such as sulfuric acid, formic acid, or acetic acid. Additionally, a pH adjuster, a polymer flocculant, or the like may also be used in combination. According to the present invention, the carbon black dispersion and the emulsion-polymerized rubber latex may be naturally coagulated upon mixing them without using a coagulant.

The pH of the mixture of the carbon black dispersion and the emulsion-polymerized rubber latex in the coagulation step is not limited and is preferably 1.0 to 6.0, more preferably 3.0 to 4.0. If the mixture has a pH within the above range, it tends to be efficiently coagulated into particles. The above-mentioned acidic compounds may be used as coagulants for the coagulation under acidic conditions (acid coagulation).

A dehydration step and/or a drying step for removing the dispersion medium is usually performed as a final step of the rubber masterbatch production. Dehydration or drying may be performed by any known method using a dehydrator, a vacuum dryer, an air dryer, a drum dryer, a band dryer, or the like. For better dispersion of carbon black, a mechanical shear force is preferably applied during the drying. Application of a shear force during the drying may enhance the mechanical strength, abrasion resistance, or flex crack resistance of the resulting rubber masterbatch or a rubber composition formed from the rubber masterbatch. The drying under shear force application may be performed preferably using a batch kneader or a continuous kneader (extruder), more preferably using a co-rotating or counter-rotating twin screw kneading extruder. The rubber masterbatch from which the dispersion medium is removed by dehydration or drying as described above usually has a moisture content of preferably 2% by mass or less.

The rubber masterbatch of the present invention may optionally contain components other than the above components (hereinafter, also referred to as other components) to an extent not impairing the purpose of the present invention. The other components may be used as materials for producing a rubber masterbatch together with an emulsion-polymerized rubber latex and carbon black. Alternatively, the other components may be added after the rubber

masterbatch production, to prepare a rubber composition. In the latter case, the other components may be added before the dispersion obtained after the coagulation step is dried, or may be incorporated, for example, by addition or melt-mixing after the drying. Furthermore, the other components may be incorporated, for example, by addition or melt-mixing into the prepared rubber composition.

Examples of the other components include the above-mentioned compounding materials including inorganic fillers such as silica, oil, and zinc oxide. Organic acids such as stearic acid can be added in the preparation of a rubber composition from the prepared rubber masterbatch of the present invention. In order to obtain a rubber product with good properties such as mechanical strength, abrasion resistance, and flex crack resistance, a vulcanizing agent (crosslinking agent) such as sulfur is preferably added to allow the rubber component to be vulcanized (crosslinked).

Organic acids such as stearic acid, among the other components, can usually be added in the preparation of a rubber composition from the prepared rubber masterbatch of the present invention. If an organic acid is added during the preparation of the rubber masterbatch, the organic acid content may exceed the amount defined in the present invention. In such a case, the organic acid may interfere with the interaction between the rubber formed from the latex and carbon black, similarly as in the case of the organic acid derived from an emulsifier contained in an emulsion-polymerized rubber latex. When an organic acid is added after the rubber masterbatch production, the interaction is considered to be little interfered.

The rubber masterbatch of the present invention may also contain other rubbers such as solution-polymerized rubber or natural rubber in addition to the rubber component derived from the emulsion-polymerized rubber latex. The proportion of other rubbers to be blended is not limited and is usually preferably 50% by mass or less, more preferably 30% by mass or less, still more preferably 20% by mass or less of the total rubber component.

If the other rubber is in the latex form, it may be used with the emulsion-polymerized rubber latex or the carbon black dispersion in the mixing and coagulation steps. If the other rubber material is in a massive form, it may be added or kneaded into the prepared rubber masterbatch or rubber composition. Preferable examples of other rubbers include S-SBR mentioned above.

The rubber masterbatch according to the third aspect of the present invention can be suitably used for a rubber composition for various tire components such as treads of the above-mentioned pneumatic tire.

EXAMPLES

The present invention will be specifically described based on examples but is not limited thereto.

[Tread 1]

Chemicals used for producing an MB are listed below.

Emulsifier (1): rosin acid soap available from Harima Chemicals, Inc.
Emulsifier (2): fatty acid soap available from Wako Pure Chemical Industries, Ltd.
Electrolyte: sodium phosphate available from Wako Pure Chemical Industries, Ltd.
Styrene: styrene available from Wako Pure Chemical Industries, Ltd.
Butadiene: 1,3-butadiene available from Takachiho Chemical Industrial Co., Ltd.
Molecular weight regulator: tert-dodecyl mercaptan available from Wako Pure Chemical Industries, Ltd.
Radical initiator: paramenthane hydroperoxide available from NOF Corporation
SFS: sodium formaldehyde sulfoxylate available from Wako Pure Chemical Industries, Ltd.
EDTA: sodium ethylenediaminetetraacetate available from Wako Pure Chemical Industries, Ltd.
Catalyst: ferric sulfate available from Wako Pure Chemical Industries, Ltd.
Polymerization terminator: N,N'-dimethyl dithiocarbamate available from Wako Pure Chemical Industries, Ltd.
Alcohol: methanol or ethanol available from Kanto Chemical Co., Inc.
Formic acid: formic acid available from Kanto Chemical Co., Inc.
Sodium chloride: sodium chloride available from Wako Pure Chemical Industries, Ltd.
Carbon black N220: Shoblack N220 available from Cabot Japan K. K.
Fine particle carbon black: DIABLACK XR available from Mitsubishi Chemical Corporation
DEMOL N: surfactant DEMOL N (sodium salt of formalin condensate of β-naphthalene sulfonate (anionic surfactant)) available from Kao Corporation
Aqueous sodium carbonate solution: sodium carbonate (concentration: 0.15% by mass) available from Wako Pure Chemical Industries, Ltd.
Tetrakis[methylene-3-(3',5'-di-tert-butyl-4'-hydroxyphenyl)propionate]methane: Irganox1010 available from BASF Japan, Ltd.

<Production of MB (T1-1)>

(Production of emulsion-polymerized rubber)

An amount of 2000 g of distilled water, 45 g of the emulsifier (1), 1.5 g of the emulsifier (2), 8 g of the electrolyte, 250 g of the styrene, 750 g of the butadiene, and 2 g of the molecular weight regulator were charged into a pressure-resistant reactor provided with a stirrer. The reactor temperature was set to 5°C. An aqueous solution containing 1 g of the radical initiator and 1.5 g of the SFS and an aqueous solution containing 0.7 g of the EDTA and 0.5 g of the catalyst were added to the reactor, so that the polymerization was initiated. Five hours after the initiation of polymerization, 2 g of the polymerization terminator was added to stop the reaction, whereby latex was prepared.

Unreacted monomers were removed from the latex by steam distillation. Then, the latex was added to the alcohol and coagulated by adding a saturated aqueous sodium chloride or the formic acid while adjusting the pH to 3 to 5 to give a crumb polymer. The polymer was dried with a vacuum dryer at 40°C, whereby a solid rubber (emulsion-polymerized rubber) was obtained.

(Polymer (1))

An amount of 100 g of the emulsion-polymerized rubber and 1.0 L of toluene were placed in a 2-L glass separable flask, and warmed to 60°C with stirring to completely dissolve the emulsion-polymerized rubber. After complete dissolution, the solution of the emulsion-polymerized rubber in toluene was cooled to room temperature and filtered through a metal 250-mesh, followed by addition of 1.5 L of methanol to precipitate the rubber component. A series of dissolution by toluene and precipitation with methanol was again repeated, four times in total, so that the agents for emulsion polymerization and the like contained in the emulsion-polymerized rubber were extracted. The resulting emulsion-polymerized rubber was kneaded together with tetrakis[methylene-3-(3',5'-di-tert-butyl-4'-hydroxyphenyl)propionate]methane as an antioxidant in an amount of 1000 ppm based on the emulsion-polymerized rubber. The mixture was dried at 100°C for one hour to give a polymer (1). The acetone extractable content in the polymer (1) was 0.5% by mass when determined by an acetone extraction method in conformity with JIS K 6350.

(MB (T1-1))

The polymer (1) and carbon black N220 at a mass ratio of 70:30 were kneaded with a Banbury mixer to give a MB (T1-1).

<Production of MB (T1-2)>

A MB (T1-2) was prepared in the same manner as described for the MB (T1-1), except that the reprecipitation was performed three times in total. The acetone extractable content was 1.5% by mass.

<Production of MB (T1-3)>

A MB (T1-3) was prepared in the same manner as described for the MB (T1-1), except that the reprecipitation was performed twice in total. The acetone extractable content was 2.5% by mass.

<Production of MB (T1-4)>

A MB (T1-4) was prepared in the same manner as described for the MB (T1-1), except that the reprecipitation was performed once. The acetone extractable content was 5.0% by mass.

<Production of MB (T1-5)>

(Preparation of emulsion-polymerized rubber latex)

An amount of 2000 g of distilled water, 45 g of the emulsifier (1), 1.5 g of the emulsifier (2), 8 g of the electrolyte, 250 g of the styrene, 750 g of the butadiene, and 2 g of the molecular weight regulator were charged into a pressure-resistant reactor provided with a stirrer. The reactor temperature was set to 5°C. An aqueous solution containing 1 g of the radical initiator and 1.5 g of the SFS and an aqueous solution containing 0.7 g of the EDTA and 0.5 g of the catalyst were added to the reactor, so that the polymerization was initiated. Five hours after the initiation of polymerization, 2 g of the polymerization terminator was added to stop the reaction, and unreacted monomers were removed by steam distillation,

whereby an emulsion-polymerized rubber latex was prepared.

(Preparation of carbon black N220 dispersion)

An amount of 1900 g of deionized water and 100 g of carbon black N220 were placed in a colloid mill having a rotor diameter of 30 mm, and they were stirred with a rotor-stator gap of 1 mm at a rotational speed of 2000 rpm for 10 minutes. Subsequently, DEMOL N was added until its concentration reached 0.05% by mass. The mixture was circulated three times using a pressure homogenizer to prepare a carbon black N220 dispersion.

(Mixing, coagulation, and drying of emulsion-polymerized rubber latex and carbon black N220 dispersion)

The emulsion-polymerized rubber latex and the carbon black N220 dispersion were mixed in a solids content ratio (mass ratio) of rubber component: carbon black N220 of 70:30. After the mixture was homogenized, sulfuric acid was added thereto under stirring until the pH of the mixture reached 5 to be coagulated. The coagulum was filtered to collect a rubber fraction. The rubber fraction was washed with pure water until the liquid after the washing (washing water) had a pH of 7, followed by drying, so that a composite (composite of the emulsion-polymerized rubber and carbon black N220) was obtained.

(MB (T1-5))

An amount of 100 g of the composite and 1.0 L of an aqueous sodium carbonate solution were placed in a 2-L glass separable flask, and warmed to 60°C, followed by stirring for 15 minutes and cooling to room temperature. A resulting dispersion of the composite was filtered through a metal 250-mesh. The washing operation of stirring with the aqueous sodium carbonate solution and filtration was again repeated, four times in total, so that the soap component and the organic acid component contained in the composite were extracted. The resulting composite was kneaded together with tetrakis[methylene-3-(3' ,5'-di-tert-butyl-4'-hydroxyphenyl) propionate]methane as an antioxidant in an amount of 1000 ppm based on the composite. The mixture was dried at 100°C for one hour to give a MB (T1-5). The soap content and the organic acid content in the MB (T1-5) were both 0.1% by mass when determined in conformity with JIS K 6237.

<Production of MB (T1-6)>

A MB (T1-6) was prepared in the same manner as described for the MB (T1-5), except that the series of washing and filtration was performed three times in total. The soap content and the organic acid content were both 0.5% by mass.

<Production of MB (T1-7)>

A MB (T1-7) was prepared in the same manner as described for the MB (T1-5), except that the series of washing and filtration was performed twice in total. The soap content and the organic acid content were 1.0% by mass and 1.5% by mass, respectively.

<Production of MB (T1-8)>

A MB (T1-8) was prepared in the same manner as described for the MB (T1-5), except that the series of washing and filtration was performed once. The soap content and the organic acid content were 2.0% by mass and 3.0% by mass, respectively.

<Production of MB (T2-1)>

The polymer (1) and the fine particle carbon black at a mass ratio of 30:30 were kneaded with a Banbury mixer to give a MB (T2-1).

<Production of MB (T2-2)>

A MB (T2-2) was prepared in the same manner as described for the MB (T2-1), except that the reprecipitation was performed three times in total. The acetone extractable content was 1.5% by mass.

<Production of MB (T2-3)>

A MB (T2-3) was prepared in the same manner as described for the MB (T2-1), except that the reprecipitation was performed twice in total. The acetone extractable content was 2.5% by mass.

<Production of MB (T2-4)>

A MB (T2-4) was prepared in the same manner as described for the MB (T2-1), except that the reprecipitation was performed once. The acetone extractable content was 5.0% by mass.

<Production of MB (T2-5)>

(Preparation of fine particle carbon black dispersion)

An amount of 1900 g of deionized water and 100 g of the fine particle carbon black were placed in a colloid mill having a rotor diameter of 30 mm, and they were stirred with a rotor-stator gap of 1 mm at a rotational speed of 2000 rpm for 10 minutes. Subsequently, DEMOL N was added until its concentration reached 0.05% by mass. The mixture was circulated three times using a pressure homogenizer to prepare a fine particle carbon black dispersion.

(Mixing, coagulation, and drying of emulsion-polymerized rubber latex and fine particle carbon black dispersion)

The emulsion-polymerized rubber latex and the fine particle carbon black dispersion were mixed in a solids content ratio (mass ratio) of rubber component:fine particle carbon black of 30:30. After the mixture was homogenized, sulfuric acid was added thereto with stirring until the pH of the mixture reached 5 to be coagulated. The coagulum was filtered to collect a rubber fraction. The rubber fraction was washed with pure water until the liquid after the washing (washing water) had a pH of 7, followed by drying, so that a composite (composite of the emulsion-polymerized rubber and the fine particle carbon black) was obtained.

(MB (T2-5))

An amount of 100 g of the composite and 1.0 L of an aqueous sodium carbonate solution were placed in a 2-L glass separable flask, and warmed to 60°C, followed by stirring for 15 minutes and cooling to room temperature. A resulting dispersion of the composite was filtered through a metal 250-mesh. The washing operation of stirring with the aqueous sodium carbonate solution and filtration was again repeated, four times in total, so that the soap component and the organic acid component contained in the composite were extracted. The resulting composite was kneaded together with tetrakis[methylene-3-(3',5'-di-tert-butyl-4'-hydroxyphenyl) propionate]methane as an antioxidant in an amount of 1000 ppm based on the composite. The mixture was dried at 100°C for one hour to give a MB (T2-5). The soap content and the organic acid content in the MB (T2-5) were both 0.1% by mass when determined in conformity with JIS K 6237.

<Production of MB (T2-6)>

A MB (T2-6) was prepared in the same manner as described for the MB (T2-5), except that the series of washing and filtration was performed three times in total. The soap content and the organic acid content were both 0.5% by mass.

<Production of MB (T2-7)>

A MB (T2-7) was prepared in the same manner as described for the MB (T2-5), except that the series of washing and filtration was performed twice in total. The soap content and the organic acid content were 1.0% by mass and 1.5% by mass, respectively.

<Production of MB (T2-8)>

A MB (T2-8) was prepared in the same manner as described for the MB (T2-5), except that the series of washing and filtration was performed once. The soap content and the organic acid content were 2.0% by mass and 3.0% by mass, respectively.

<Production of MB (T3-1)>

The polymer (1) and carbon black N220 at a mass ratio of 30:30 were kneaded with a Banbury mixer to give a MB (T3-1).

<Production of MB (T3-2)>

A MB (T3-2) was prepared in the same manner as described for the MB (T3-1), except that the reprecipitation was performed three times in total. The acetone extractable content was 1.5% by mass.

<Production of MB (T3-3)>

A MB (T3-3) was prepared in the same manner as described for the MB (T3-1), except that the reprecipitation was performed twice in total. The acetone extractable content was 2.5% by mass.

<Production of MB (T3-4)>

A MB (T3-4) was prepared in the same manner as described for the MB (T3-1), except that the reprecipitation was performed once. The acetone extractable content was 5.0% by mass.

<Production of MB (T3-5)>

(Mixing, coagulation, and drying of emulsion-polymerized rubber latex and carbon black N220 dispersion)

The emulsion-polymerized rubber latex and the carbon black N220 dispersion were mixed in a solids content ratio (mass ratio) of rubber component: carbon black N220 of 30:30. After the mixture was homogenized, sulfuric acid was added thereto with stirring until the pH of the mixture reached 5 to be coagulated. The coagulum was filtered to collect a rubber fraction. The rubber fraction was washed with pure water until the liquid after the washing (washing water) had a pH of 7, followed by drying, so that a composite (composite of the emulsion-polymerized rubber and carbon black N220) was obtained.

(MB (T3-5))

An amount of 100 g of the composite and 1.0 L of an aqueous sodium carbonate solution were placed in a 2-L glass separable flask, and warmed to 60°C, followed by stirring for 15 minutes and cooling to room temperature. A resulting dispersion of the composite was filtered through a metal 250-mesh. The washing operation of stirring with the aqueous sodium carbonate solution and filtration was again repeated, four times in total, so that the soap component and the organic acid component contained in the composite were extracted. The resulting composite was kneaded together with tetrakis[methylene-3-(3' ,5'-di-tert-butyl-4'-hydroxyphenyl) propionate]methane as an antioxidant in an amount of 1000 ppm based on the composite. The mixture was dried at 100°C for one hour to give a MB (T3-5). The soap content and the organic acid content in the MB (T3-5) were both 0.1% by mass when determined in conformity with JIS K 6237.

<Production of MB (T3-6)>

A MB (T3-6) was prepared in the same manner as described for the MB (T3-5), except that the series of washing and filtration was performed three times in total. The soap content and the organic acid content were both 0.5% by mass.

<Production of MB (T3-7)>

A MB (T3-7) was prepared in the same manner as described for the MB (T3-5), except that the series of washing and filtration was performed twice in total. The soap content and the organic acid content were 1.0% by mass and 1.5% by mass, respectively.

<Production of MB (T3-8)>

A MB (T3-8) was prepared in the same manner as described for the MB (T3-5), except that the series of washing and filtration was performed once. The soap content and the organic acid content were 2.0% by mass and 3.0% by mass, respectively.

<Production of MB (T4-1)>

The polymer (1) and carbon black N220 at a mass ratio of 35:30 were kneaded with a Banbury mixer to give a MB (T4-1).

<Production of MB (T4-2)>

A MB (T4-2) was prepared in the same manner as described for the MB (T4-1), except that the reprecipitation was performed three times in total. The acetone extractable content was 1.5% by mass.

<Production of MB (T4-3)>

A MB (T4-3) was prepared in the same manner as described for the MB (T4-1), except that the reprecipitation was performed twice in total. The acetone extractable content was 2.5% by mass.

<Production of MB (T4-4)>

A MB (T4-4) was prepared in the same manner as described for the MB (T4-1), except that the reprecipitation was performed once. The acetone extractable content was 5.0% by mass.

<Production of MB (T4-5)>

(Mixing, coagulation, and drying of emulsion-polymerized rubber latex and carbon black N220 dispersion)

The emulsion-polymerized rubber latex and the carbon black N220 dispersion were mixed in a solids content ratio (mass ratio) of rubber component: carbon black N220 of 35:30. After the mixture was homogenized, sulfuric acid was added thereto with stirring until the pH of the mixture reached 5 to be coagulated. The coagulum was filtered to collect a rubber fraction. The rubber fraction was washed with pure water until the liquid after the washing (washing water) had a pH of 7, followed by drying, so that a composite (composite of the emulsion-polymerized rubber and carbon black N220) was obtained.

(MB (T4-5))

An amount of 100 g of the composite and 1.0 L of an aqueous sodium carbonate solution were placed in a 2-L glass separable flask, and warmed to 60°C, followed by stirring for 15 minutes and cooling to room temperature. A resulting dispersion of the composite was filtered through a metal 250-mesh. The washing operation of stirring with the aqueous sodium carbonate solution and filtration was again repeated, four times in total, so that the soap component and the organic acid component contained in the composite were extracted. The resulting composite was kneaded together with tetrakis[methylene-3-(3',5'-di-tert-butyl-4'-hydroxyphenyl) propionate]methane as an antioxidant in an amount of 1000 ppm based on the composite. The mixture was dried at 100°C for one hour to give a MB (T4-5). The soap content and the organic acid content in the MB (T4-5) were both 0.1% by mass when determined in conformity with JIS K 6237.

<Production of MB (T4-6)>

A MB (T4-6) was prepared in the same manner as described for the MB (T4-5), except that the series of washing and filtration was performed three times in total. The soap content and the organic acid content were both 0.5% by mass.

<Production of MB (T4-7)>

A MB (T4-7) was prepared in the same manner as described for the MB (T4-5), except that the series of washing and filtration was performed twice in total. The soap content and the organic acid content were 1.0% by mass and 1.5% by mass, respectively.

<Production of MB (T4-8)>

A MB (T4-8) was prepared in the same manner as described for the MB (T4-5), except that the series of washing and filtration was performed once. The soap content and the organic acid content were 2.0% by mass and 3.0% by mass, respectively.

<Analysis of rubber in MB>

Other features of the MBs obtained above were analyzed by the following methods. Table 1 shows the results.

(Determination of peak top molecular weight (Mp) and molecular weight distribution (Mw/Mn))

The peak top molecular weight (Mp) and the molecular weight distribution (Mw/Mn) of the MBs were determined by a gel permeation chromatograph (GPC) (GPC-8000 series available from TOSOH Corporation, detector: differential refractometer, column: TSKGEL SUPERMALTIPORE HZ-M available from TOSOH Corporation) and calibrated with polystyrene standards.

(Microstructure identification)

The microstructure of the polymer was determined with an apparatus of JNM-ECA series available from JEOL Ltd. Based on the result, the amount (% by mass) of styrene in the polymer was calculated.

[Table 1]

| | Rubber in MB | | | | | | | |
|---|---|---|---|---|---|---|---|---|
| | (T1-1) (T2-1) (T3-1) (T4-1) (S1) (C1) | (T1-2) (T2-2) (T3-2) (T4-2) (S2) (C2) | (T1-3) (T2-3) (T3-3) (T4-3) (S3) (C3) | (T1-4) (T2-4) (T3-4) (T4-4) (S4) (C4) | (T1-5) (T2-5) (T3-5) (T4-5) (S5) (C5) | (T1-6) (T2-6) (T3-6) (T4-6) (S6) (C6) | (T1-7) (T2-7) (T3-7) (T4-7) (S7) (C7) | (T1-8) (T2-8) (T3-8) (T4-8) (S8) (C8) |
| Components extractable with acetone (%) | 0.5 | 1.5 | 2.5 | 5.0 | - | - | - | - |
| Soap (%) | - | - | - | - | 0.1 | 0.5 | 1.0 | 2.0 |
| Organic acid (%) | - | - | - | - | 0.1 | 0.5 | 1.5 | 3.0 |
| Mp ($\times 10^4$) | 27 | 27 | 27 | 27 | 27 | 27 | 27 | 27 |
| Mw/Mn | 3.2 | 3.2 | 3.2 | 3.2 | 3.2 | 3.2 | 3.2 | 3.2 |
| Styrene content (%) | 23.5 | 23.5 | 23.5 | 23.5 | 23.5 | 23.5 | 23.5 | 23.5 |

<Examples and Comparative Examples>

Various chemicals used in the examples and the comparative examples are listed below.

NR: RSS#3
MB (T1-1) to MB (T1-8): MBs prepared above
MB (T2-1) to MB (T2-8): MBs prepared above
MB (T3-1) to MB (T3-8): MBs prepared above
MB (T4-1) to MB (T4-8): MBs prepared above
Emulsion-polymerized SBR: SBR1502 available from JSR Corporation
Solution-polymerized SBR: Buna VSL5025-0 available from LANXESS
Carbon black: Shoblack N220 available from Cabot Japan K. K.
Fine particle carbon black: DIABLACK XR available from Mitsubishi Chemical Corporation
Silica: ULTRASIL VN3 available from Degussa
Silane coupling agent: Si69 available from Degussa
Oil: Process X-140 available from JX Nippon Oil & Energy Corporation
Stearic acid: stearic acid available from NOF Corporation
Zinc oxide: Zinc oxide #1 available from Mitsui Mining and Smelting Co., Ltd.
Antioxidant: Nocrac 6C available from Ouchi Shinko Chemical Industrial Co., Ltd.
Wax: Sunnoc wax available from Ouchi Shinko Chemical Industrial Co., Ltd.
Sulfur: powdered sulfur available from Tsurumi Chemical Industry Co., Ltd.
Vulcanization accelerator (1): Nocceler CZ available from Ouchi Shinko Chemical Industrial Co., Ltd.
Vulcanization accelerator (2): Nocceler D available from Ouchi Shinko Chemical Industrial Co., Ltd.

The chemicals according to the formulation shown in Tables 1-1, 1-2, or 1-3 were mixed and kneaded to produce an unvulcanized rubber composition. The unvulcanized rubber composition was press-vulcanized at 170°C for 20 minutes to produce a vulcanized rubber composition.

The unvulcanized rubber composition and vulcanized rubber composition were evaluated for the fuel economy, wet-grip performance, abrasion resistance, and processability by the test methods described below.

(Fuel economy (Rolling resistance))

The tanδ of the vulcanized rubber composition was measured using a spectrometer available from Ueshima Seisakusho Co., Ltd. under a dynamic strain amplitude of 1%, a frequency of 10 Hz, and a temperature of 60°C, and expressed as an index using the equation below. A higher index value indicates a smaller rolling resistance, which in turn indicates excellent fuel economy. (Fuel economy index) = (tanδ of Comparative Example 1-1, 2-1, 3-1, or 4-1)/(tanδ of each formulation) × 100

(Abrasion resistance)

The abrasion loss of the vulcanized rubber composition was measured using a Lambourn abrasion tester under room temperature, an applied load of 1.0 kgf, and a slip ratio of 30%, and expressed as an index using the equation below. A higher index value indicates better abrasion resistance. (Abrasion resistance index) = (Abrasion loss of Comparative

Example 1-1, 2-1, 3-1, or 4-1)/(Abrasion loss of each formulation) × 100

(Wet-grip performance)

The wet-grip performance was evaluated using a flat belt friction tester (FR5010 Series) available from Ueshima Seisakusho Co., Ltd. A cylindrical rubber test piece having a width of 20 mm and a diameter of 100 mm prepared from the vulcanized rubber composition was used as a sample. The slip ratio of the sample on a road surface was changed in the range of 0 to 70% under a speed of 20 km/hour, a load of 4 kgf, and a road surface temperature of 20°C, and the maximum of the friction coefficients monitored with that range was read and expressed as an index using the equation below. A higher index value indicates better wet-grip performance. (Wet-grip performance index) = (Maximum of friction coefficients of each formulation)/(maximum of friction coefficients of Comparative Example 1-1, 2-1, 3-1, or 4-1) × 100

(Processability)

The Mooney viscosity ($ML_{1+4}$/130°C) of the unvulcanized rubber composition was determined in conformity with JIS K 6300-1 "Rubber, unvulcanized - Physical property - Part 1: Determination of Mooney viscosity and pre-vulcanization characteristics with Mooney viscometer". Specifically, a Mooney viscosity tester was preheated for 1 minute up to 130°C and a small rotor was rotated under this temperature condition. After 4-minute rotation, the Mooney viscosity ($ML_{1+4}$/130°C) of the unvulcanized rubber composition was measured. The values are expressed as an index using the equation below. A higher index value indicates a lower viscosity, which in turn indicates better processability.

(Processability index) = (Mooney viscosity of Comparative Example 1-1, 2-1, 3-1, or 4-1)/(Mooney viscosity of each formulation) × 100

[Table 1-1]

Tread

| | | | Example | | | | | | Comparative Example | | |
|---|---|---|---|---|---|---|---|---|---|---|---|
| | | | 1-1 | 1-2 | 1-3 | 1-4 | 1-5 | 1-6 | 1-1 | 1-2 | 1-3 |
| Formulation (parts by mass) | NR | | 30 | 30 | 30 | 30 | 30 | 30 | 30 | 30 | 30 |
| | MB | Number | (T1-1) | (T1-2) | (T1-3) | (T1-5) | (T1-6) | (T1-7) | — | (T1-4) | (T1-8) |
| | | Amount | 100 (Rubber 70, CB 30) | 100 (Rubber 70, CB 30) | 100 (Rubber 70, CB 30) | 100 (Rubber 70, CB 30) | 100 (Rubber 70, CB 30) | 100 (Rubber 70, CB 30) | — | 100 (Rubber 70, CB 30) | 100 (Rubber 70, CB 30) |
| | Emulsion-polymerized SBR | | — | — | — | — | — | — | 70 | — | — |
| | Carbon black N220 | | — | — | — | — | — | — | 30 | — | — |
| | Silica | | 30 | 30 | 30 | 30 | 30 | 30 | 30 | 30 | 30 |
| | Silane coupling agent | | 2.4 | 2.4 | 2.4 | 2.4 | 2.4 | 2.4 | 2.4 | 2.4 | 2.4 |
| | Oil | | 5 | 5 | 5 | 5 | 5 | 5 | 5 | 5 | 5 |
| | Stearic acid | | 2 | 2 | 2 | 2 | 2 | 2 | 2 | 2 | 2 |
| | Zinc oxide | | 3 | 3 | 3 | 3 | 3 | 3 | 3 | 3 | 3 |
| | Antioxidant | | 1 | 1 | 1 | 1 | 1 | 1 | 1 | 1 | 1 |
| | Wax | | 1 | 1 | 1 | 1 | 1 | 1 | 1 | 1 | 1 |
| | Sulfur | | 1.5 | 1.5 | 1.5 | 1.5 | 1.5 | 1.5 | 1.5 | 1.5 | 1.5 |
| | Vulcanization accelerator (1) | | 1 | 1 | 1 | 1 | 1 | 1 | 1 | 1 | 1 |
| | Vulcanization accelerator (2) | | 0.5 | 0.5 | 0.5 | 0.5 | 0.5 | 0.5 | 0.5 | 0.5 | 0.5 |
| Evaluation | Fuel economy index | | 109 | 107 | 104 | 107 | 104 | 103 | 100 | 102 | 101 |
| | Wet-grip performance index | | 104 | 102 | 101 | 106 | 105 | 104 | 100 | 101 | 101 |
| | Abrasion resistance index | | 105 | 104 | 102 | 104 | 103 | 103 | 100 | 101 | 101 |
| | Processability index | | 100 | 100 | 101 | 100 | 100 | 101 | 100 | 102 | 102 |

Each example in which carbon black and silica were added to an emulsion-polymerized SBR with a reduced acetone extractable content or an emulsion-polymerized SBR with a reduced soap content and a reduced organic acid content achieves not only excellent processability but also a balanced improvement in fuel economy, wet-grip performance, and abrasion resistance. In particular, such effects are proved to be remarkably achieved when an MB is used.

[Table 1-2]

Tread

| | | | Example | | | | | | Comparative Example | | |
|---|---|---|---|---|---|---|---|---|---|---|---|
| | | | 2-1 | 2-2 | 2-3 | 2-4 | 2-5 | 2-6 | 2-1 | 2-2 | 2-3 |
| Formulation (parts by mass) | NR | | 70 | 70 | 70 | 70 | 70 | 70 | 70 | 70 | 70 |
| | MB | Number | (T2-1) | (T2-2) | (T2-3) | (T2-5) | (T2-6) | (T2-7) | — | (T2-4) | (T2-8) |
| | | Amount | 60 (Rubber 30, CB 30) | 60 (Rubber 30, CB 30) | 60 (Rubber 30, CB 30) | 60 (Rubber 30, CB 30) | 60 (Rubber 30, CB 30) | 60 (Rubber 30, CB 30) | — | 60 (Rubber 30, CB 30) | 60 (Rubber 30, CB 30) |
| | Emulsion-polymerized SBR | | — | — | — | — | — | — | 30 | — | — |
| | Fine particle carbon black | | — | — | — | — | — | — | 30 | — | — |
| | Silica | | 30 | 30 | 30 | 30 | 30 | 30 | 30 | 30 | 30 |
| | Silane coupling agent | | 2.4 | 2.4 | 2.4 | 2.4 | 2.4 | 2.4 | 2.4 | 2.4 | 2.4 |
| | Oil | | 5 | 5 | 5 | 5 | 5 | 5 | 5 | 5 | 5 |
| | Stearic acid | | 2 | 2 | 2 | 2 | 2 | 2 | 2 | 2 | 2 |
| | Zinc oxide | | 3 | 3 | 3 | 3 | 3 | 3 | 3 | 3 | 3 |
| | Antioxidant | | 1 | 1 | 1 | 1 | 1 | 1 | 1 | 1 | 1 |
| | Wax | | 1 | 1 | 1 | 1 | 1 | 1 | 1 | 1 | 1 |
| | Sulfur | | 1.5 | 1.5 | 1.5 | 1.5 | 1.5 | 1.5 | 1.5 | 1.5 | 1.5 |
| | Vulcanization accelerator (1) | | 1 | 1 | 1 | 1 | 1 | 1 | 1 | 1 | 1 |
| | Vulcanization accelerator (2) | | 0.5 | 0.5 | 0.5 | 0.5 | 0.5 | 0.5 | 0.5 | 0.5 | 0.5 |
| Evaluation | Fuel economy index | | 105 | 102 | 102 | 104 | 103 | 102 | 100 | 101 | 101 |
| | Wet-grip performance index | | 105 | 103 | 102 | 105 | 104 | 103 | 100 | 101 | 101 |
| | Abrasion resistance index | | 109 | 108 | 104 | 109 | 108 | 103 | 100 | 101 | 101 |
| | Processability index | | 101 | 102 | 102 | 101 | 102 | 102 | 100 | 102 | 103 |

Each example in which fine particle carbon black and silica were added to an emulsion-polymerized SBR with a reduced acetone extractable content or an emulsion-polymerized SBR with a reduced soap content and a reduced organic acid content achieves not only excellent processability but also a balanced improvement in fuel economy, wet-grip performance, and abrasion resistance. In particular, such effects are proved to be remarkably achieved when an MB is used.

[Table 1-3]

Tread

| | | | Example | | | | | | Comparative Example | | |
|---|---|---|---|---|---|---|---|---|---|---|---|
| | | | 3-1 | 3-2 | 3-3 | 3-4 | 3-5 | 3-6 | 3-1 | 3-2 | 3-3 |
| Formulation (parts by mass) | NR | | 70 | 70 | 70 | 70 | 70 | 70 | 70 | 70 | 70 |
| | MB | Number | (T3-1) | (T3-2) | (T3-3) | (T3-5) | (T3-6) | (T3-7) | — | (T3-4) | (T3-8) |
| | | Amount | 60 (Rubber 30, CB 30) | 60 (Rubber 30, CB 30) | 60 (Rubber 30, CB 30) | 60 (Rubber 30, CB 30) | 60 (Rubber 30, CB 30) | 60 (Rubber 30, CB 30) | — | 60 (Rubber 30, CB 30) | 60 (Rubber 30, CB 30) |
| | Emulsion-polymerized SBR | | — | — | — | — | — | — | 30 | — | — |
| | Carbon black N220 | | — | — | — | — | — | — | 30 | — | — |
| | Silica | | 30 | 30 | 30 | 30 | 30 | 30 | 30 | 30 | 30 |
| | Silane coupling agent | | 2.4 | 2.4 | 2.4 | 2.4 | 2.4 | 2.4 | 2.4 | 2.4 | 2.4 |
| | Oil | | 5 | 5 | 5 | 5 | 5 | 5 | 5 | 5 | 5 |
| | Stearic acid | | 2 | 2 | 2 | 2 | 2 | 2 | 2 | 2 | 2 |
| | Zinc oxide | | 3 | 3 | 3 | 3 | 3 | 3 | 3 | 3 | 3 |
| | Antioxidant | | 1 | 1 | 1 | 1 | 1 | 1 | 1 | 1 | 1 |
| | Wax | | 1 | 1 | 1 | 1 | 1 | 1 | 1 | 1 | 1 |
| | Sulfur | | 1.5 | 1.5 | 1.5 | 1.5 | 1.5 | 1.5 | 1.5 | 1.5 | 1.5 |
| | Vulcanization accelerator (1) | | 1 | 1 | 1 | 1 | 1 | 1 | 1 | 1 | 1 |
| | Vulcanization accelerator (2) | | 0.5 | 0.5 | 0.5 | 0.5 | 0.5 | 0.5 | 0.5 | 0.5 | 0.5 |
| Evaluation | Fuel economy index | | 110 | 107 | 104 | 108 | 105 | 105 | 100 | 102 | 102 |
| | Wet-grip performance index | | 105 | 104 | 102 | 105 | 104 | 102 | 100 | 101 | 101 |
| | Abrasion resistance index | | 111 | 109 | 106 | 112 | 109 | 105 | 100 | 102 | 102 |
| | Processability index | | 99 | 99 | 100 | 99 | 100 | 100 | 100 | 100 | 101 |

Each example in which carbon black and silica were added to an emulsion-polymerized SBR with a specific molecular weight characteristic and a reduced acetone extractable content or an emulsion-polymerized SBR with a specific molecular weight characteristic and reduced soap and organic acid contents achieves not only excellent processability but also a balanced improvement in fuel economy, wet-grip performance, and abrasion resistance. In particular, such effects are proved to be remarkably achieved when an MB is used.

[Table 1-4]

Tread

| | | | Example | | | | | | Comparative Example | | |
|---|---|---|---|---|---|---|---|---|---|---|---|
| | | | 4-1 | 4-2 | 4-3 | 4-4 | 4-5 | 4-6 | 4-1 | 4-2 | 4-3 |
| Formulation (parts by mass) | NR | | 30 | 30 | 30 | 30 | 30 | 30 | 30 | 30 | 30 |
| | MB | Number | (T4-1) | (T4-2) | (T4-3) | (T4-5) | (T4-6) | (T4-7) | — | (T4-4) | (T4-8) |
| | | Amount | 65 (Rubber 35, CB 30) | 65 (Rubber 35, CB 30) | 65 (Rubber 35, CB 30) | 65 (Rubber 35, CB 30) | 65 (Rubber 35, CB 30) | 65 (Rubber 35, CB 30) | — | 65 (Rubber 35, CB 30) | 65 (Rubber 35, CB 30) |
| | Emulsion-polymerized SBR | | — | — | — | — | — | — | 35 | — | — |
| | Solution-polymerized SBR | | 35 | 35 | 35 | 35 | 35 | 35 | 35 | 35 | 35 |
| | Carbon black N220 | | — | — | — | — | — | — | 30 | — | — |
| | Silica | | 30 | 30 | 30 | 30 | 30 | 30 | 30 | 30 | 30 |
| | Silane coupling agent | | 2.4 | 2.4 | 2.4 | 2.4 | 2.4 | 2.4 | 2.4 | 2.4 | 2.4 |
| | Oil | | 5 | 5 | 5 | 5 | 5 | 5 | 5 | 5 | 5 |
| | Stearic acid | | 2 | 2 | 2 | 2 | 2 | 2 | 2 | 2 | 2 |
| | Zinc oxide | | 3 | 3 | 3 | 3 | 3 | 3 | 3 | 3 | 3 |
| | Antioxidant | | 1 | 1 | 1 | 1 | 1 | 1 | 1 | 1 | 1 |
| | Wax | | 1 | 1 | 1 | 1 | 1 | 1 | 1 | 1 | 1 |
| | Sulfur | | 1.5 | 1.5 | 1.5 | 1.5 | 1.5 | 1.5 | 1.5 | 1.5 | 1.5 |
| | Vulcanization accelerator (1) | | 1 | 1 | 1 | 1 | 1 | 1 | 1 | 1 | 1 |
| | Vulcanization accelerator (2) | | 0.5 | 0.5 | 0.5 | 0.5 | 0.5 | 0.5 | 0.5 | 0.5 | 0.5 |
| Evaluation | Fuel economy index | | 110 | 107 | 105 | 108 | 107 | 104 | 100 | 101 | 101 |
| | Wet-grip performance index | | 106 | 103 | 102 | 107 | 104 | 103 | 100 | 101 | 102 |
| | Abrasion resistance index | | 105 | 104 | 101 | 106 | 104 | 104 | 100 | 101 | 101 |
| | Processability index | | 101 | 101 | 101 | 100 | 101 | 102 | 100 | 102 | 101 |

Each example in which carbon black and silica were added to a rubber component containing a solution-polymerized SBR and an emulsion-polymerized SBR with a reduced acetone extractable content or with reduced soap and organic acid contents achieves not only excellent processability but also a balanced improvement in fuel economy, wet-grip performance, and abrasion resistance. In particular, such effects are proved to be remarkably achieved when an MB is used.

[Tread 2]

Chemicals used for producing an MB are listed below.

Water: distilled water
Emulsifier (1): rosin acid soap available from Harima Chemicals, Inc.
Emulsifier (2): fatty acid soap available from Wako Pure Chemical Industries, Ltd.
Electrolyte: sodium phosphate available from Wako Pure Chemical Industries, Ltd.
Styrene: styrene available from Wako Pure Chemical Industries, Ltd.
Butadiene: 1,3-butadiene available from Takachiho Chemical Industrial Co., Ltd.
Polarity group-containing monomer: 2-(dimethylamino)ethyl acrylate available from Tokyo Chemical Industry Co., Ltd.
Chain-terminal modifier(1): 2-ethylhexyl mercaptopropionate available from Wako Pure Chemical Industries, Ltd.
Chain-terminal modifier(2): 9-mercapto-1-nonanol available from Sigma-Aldrich Japan
Chain-terminal modifier(3): 11-mercaptoundecanoic acid available from Sigma-Aldrich Japan
Chain-terminal modifier(4): 11-amino-1-undecanethiol available from Sigma-Aldrich Japan
Chain-terminal modifier(5): 3-mercaptopropyltriethoxysilane available from Tokyo Chemical Industry Co., Ltd.
Radical initiator: paramenthane hydroperoxide available from NOF Corporation
SFS: sodium formaldehyde sulfoxylate available from Wako Pure Chemical Industries, Ltd.
EDTA: sodium ethylenediaminetetraacetate available from Wako Pure Chemical Industries, Ltd.
Catalyst: ferric sulfate available from Wako Pure Chemical Industries, Ltd.
Polymerization terminator: N,N'-dimethyl dithiocarbamate available from Wako Pure Chemical Industries, Ltd.

Alcohol: methanol or ethanol available from Kanto Chemical Co., Inc.
Formic acid: formic acid available from Kanto Chemical Co., Inc.
Sodium chloride: sodium chloride available from Wako Pure Chemical Industries, Ltd.
Carbon black N220: Shoblack N220 available from Cabot Japan K. K.
DEMOL N: surfactant DEMOL N (sodium salt of formalin condensate of β-naphthalene sulfonate (anionic surfactant)) available from Kao Corporation
Aqueous sodium carbonate solution: sodium carbonate (concentration: 0.15% by mass) available from Wako Pure Chemical Industries, Ltd.
Tetrakis[methylene-3-(3',5'-di-tert-butyl-4'-hydroxyphenyl)propionate]methane: Irganox1010 available from BASF Japan, Ltd.

[Table 2]

Tread

| | | | Modified E-SBR latex | | | | |
|---|---|---|---|---|---|---|---|
| | | | (1) | (2) | (3) | (4) | (5) |
| Charged amount (parts by mass) | Water | | 200 | 200 | 200 | 200 | 200 |
| | Emulsifier (1) | | 4.5 | 4.5 | 4.5 | 4.5 | 4.5 |
| | Emulsifier (2) | | 0.15 | 0.15 | 0.15 | 0.15 | 0.15 |
| | Electrolyte | | 0.8 | 0.8 | 0.8 | 0.8 | 0.8 |
| | Styrene | | 25 | 25 | 25 | 25 | 25 |
| | Butadiene | | 75 | 75 | 75 | 75 | 75 |
| | Polar group-containing monomer | | 0.05 | 0.05 | 0.05 | 0.05 | 0.05 |
| | Chain-terminal modifier | Number | (1) | (2) | (3) | (4) | (5) |
| | | Amount | 0.2 | 0.2 | 0.2 | 0.2 | 0.2 |
| | Radical initiator | | 0.1 | 0.1 | 0.1 | 0.1 | 0.1 |
| | SFS | | 0.15 | 0.15 | 0.15 | 0.15 | 0.15 |
| | EDTA | | 0.07 | 0.07 | 0.07 | 0.07 | 0.07 |
| | Catalyst | | 0.05 | 0.05 | 0.05 | 0.05 | 0.05 |
| | Polymerization terminator | | 0.2 | 0.2 | 0.2 | 0.2 | 0.2 |

<Production of MB (T1A)>

(Modified emulsion-polymerized rubber (1))

According to the charging formulation (1) in Table 2, the water, the emulsifier (1), the emulsifier (2), the electrolyte, the styrene, the butadiene, the polar group-containing monomer, and the chain-terminal modifier were charged into a pressure-resistant reactor provided with a stirrer. The chain-terminal modifier was aliquoted and charged every hour into the polymerization system. The reactor temperature was set to 5°C. An aqueous solution containing the radical initiator and the SFS and an aqueous solution containing the EDTA and the catalyst were added to the reactor, so that the polymerization was initiated. Five hours after the initiation of polymerization, the polymerization terminator was added to stop the reaction, whereby latex was prepared.

Unreacted monomers were removed from the latex by steam distillation. Then, the latex was added to the alcohol and coagulated by adding a saturated aqueous sodium chloride or the formic acid while adjusting the pH to 3 to 5 to give a crumb polymer. The polymer was dried with a vacuum dryer at 40°C, whereby a solid rubber (modified emulsion-polymerized rubber (1)) was obtained.

(Polymer (1A))

An amount of 100 g of the modified emulsion-polymerized rubber (1) and 1.0 L of toluene were placed in a 2-L glass separable flask, and warmed to 60°C with stirring to completely dissolve the modified emulsion-polymerized rubber

(1) . After complete dissolution, the solution of the modified emulsion-polymerized rubber (1) in toluene was cooled to room temperature and filtered through a metal 250-mesh, followed by addition of 1.5 L of methanol to precipitate the rubber component. A series of dissolution by toluene and precipitation with methanol was again repeated, four times in total, so that the agents for emulsion polymerization and the like contained in the modified emulsion-polymerized rubber were extracted. The modified emulsion-polymerized rubber was kneaded together with tetrakis[methylene-3-(3',5'-di-tert-butyl-4'-hydroxyphenyl)propionate]methane as an antioxidant in an amount of 1000 ppm based on the modified emulsion-polymerized rubber (1). The mixture was dried at 100°C for one hour to give a polymer (1A). The acetone extractable content in the polymer (1A) was 0.5% by mass when determined by an acetone extraction method in conformity with JIS K 6350.

(MB (T1A))

The polymer (1A) and carbon black N220 at a mass ratio of 70:30 were kneaded with a Banbury mixer to give a MB (T1A).

<Production of MB (T1B)>

A MB (T1B) was prepared in the same manner as described for the MB (T1A), except that the reprecipitation was performed three times in total. The acetone extractable content was 1.5% by mass.

<Production of MB (T1C)>

A MB (T1C) was prepared in the same manner as described for the MB (T1A), except that the reprecipitation was performed twice in total. The acetone extractable content was 2.5% by mass.

<Production of MB (T1D)>

A MB (T1D) was prepared in the same manner as described for the MB (T1A), except that the reprecipitation was performed once. The acetone extractable content was 5.0% by mass.

<Production of MB (T2A) to MB (T5D)>

According to the formulation in Table 2, a MB (T2A) to a MB (T2D), a MB (T3A) to a MB (T3D), a MB (T4A) to a MB (T4D), and a MB (T5A) to a MB (T5D) were prepared in the same manner as described for the MB (T1A) to MB (T1D), except that modified emulsion-polymerized rubbers (2) to (5) were prepared and used instead of the modified emulsion-polymerized rubber (1). Table 2-1 shows the acetone extractable content in the MBs.

<Production of MB (T1a)>

(Production of modified emulsion-polymerized rubber latex)

According to the formulation (1) in Table 2, the water, the emulsifier (1), the emulsifier (2), the electrolyte, the styrene, the butadiene, the polar group-containing monomer, and the chain-terminal modifier were charged into a pressure-resistant reactor provided with a stirrer. The chain-terminal modifier was aliquoted and charged every hour into the polymerization system. The reactor temperature was set to 5°C. An aqueous solution containing the radical initiator and the SFS and an aqueous solution containing the EDTA and the catalyst were added to the reactor, so that the polymerization was initiated. Five hours after the initiation of polymerization, the polymerization terminator was added to stop the reaction, and unreacted monomers were removed by steam distillation, whereby a modified emulsion-polymerized rubber latex (1) was prepared.

(Preparation of carbon black N220 dispersion)

An amount of 1900 g of deionized water and 100 g of carbon black N220 were placed in a colloid mill having a rotor diameter of 30 mm, and they were stirred with a rotor-stator gap of 1 mm at a rotational speed of 2000 rpm for 10 minutes. Subsequently, DEMOL N was added until its concentration reached 0.05% by mass. The mixture was circulated three times using a pressure homogenizer to prepare a carbon black N220 dispersion.

(Mixing, coagulation, and drying of modified emulsion-polymerized rubber latex and carbon black N220 dispersion)

The modified emulsion-polymerized rubber latex (1) and the carbon black N220 dispersion were mixed in a solids content ratio (mass ratio) of rubber component:carbon black N220 of 70:30. After the mixture was homogenized, sulfuric acid was added thereto with stirring until the pH of the mixture reached 5 to be coagulated. The coagulum was filtered to collect a rubber fraction. The rubber fraction was washed with pure water until the liquid after the washing (washing water) had a pH of 7, followed by drying, so that a composite (1) (composite of the modified emulsion-polymerized rubber and carbon black N220) was obtained.

(MB (T1a))

An amount of 100 g of the composite (1) obtained above and 1.0 L of an aqueous sodium carbonate solution were placed in a 2-L glass separable flask, and warmed to 60°C, followed by stirring for 15 minutes and cooling to room temperature. A resulting dispersion of the composite (1) was filtered through a metal 250-mesh. The washing operation of stirring with the aqueous sodium carbonate solution and filtration was again repeated, four times in total, so that the soap component and the organic acid component contained in the composite were extracted. The resulting composite was kneaded together with tetrakis[methylene-3-(3',5'-di-tert-butyl-4'-hydroxyphenyl) propionate]methane as an antioxidant in an amount of 1000 ppm based on the composite (1). The mixture was dried at 100°C for one hour to give a MB (T1a). The soap content and the organic acid content in the MB (T1a) were both 0.1% by mass when determined in conformity with JIS K 6237.

<Production of MB (T1b)>

A MB (T1b) was prepared in the same manner as described for the MB (T1a), except that the series of washing and filtration was performed three times in total. The soap content and the organic acid content were both 0.5% by mass.

<Production of MB (T1c)>

A MB (T1c) was prepared in the same manner as described for the MB (T1a), except that the series of washing and filtration was performed twice in total. The soap content and the organic acid content were 1.0% by mass and 1.5% by mass, respectively.

<Production of MB (T1d)>

A MB (T1d) was prepared in the same manner as described for the MB (T1a), except that the series of washing and filtration was performed once. The soap content and the organic acid content were 2.0% by mass and 3.0% by mass, respectively.

<Production of MB (T2a) to MB (T5a)>

According to the formulation in Table 2, a MB (T2a) to a MB (T2d), a MB (T3a) to a MB (T3d), a MB (T4a) to a MB (T4d), and a MB (T5a) to a MB (T5d) were prepared in the same manner as described for the MB (T1a) to MB (T1d), except that modified emulsion-polymerized rubber latexes (2) to (5) were prepared and used instead of the modified emulsion-polymerized rubber latex (1). Table 2-1 shows the soap content and the organic acid content in the MBs.

<Analysis of MB>

The MBs obtained above were analyzed by the following methods. Table 2-1 shows the results.

(Determination of molecular weight distribution (Mw/Mn) and peak top molecular weight (Mp))

The molecular weight distribution (Mw/Mn) and the peak top molecular weight (Mp) of the MBs were determined by a gel permeation chromatograph (GPC) (GPC-8000 series available from TOSOH Corporation, detector: differential refractometer, column: TSKGEL SUPERMALTPORE HZ-M available from TOSOH Corporation) and calibrated with polystyrene standards.

(Microstructure identification)

The microstructure of each MB was determined with an apparatus of JNM-ECA series available from JEOL Ltd. Based on the results, the amounts (% by mass) of styrene and polar functional group-containing monomer in the polymer were calculated.

[Table 2-1]

| | Rubber in MB | | | | | | | | | | | | | | | | | | | |
|---|---|---|---|---|---|---|---|---|---|---|---|---|---|---|---|---|---|---|---|---|
| | (T1A) | (T1B) | (T1C) | (T1D) | (T2A) | (T2B) | (T2C) | (T2D) | (T3A) | (T3B) | (T3C) | (T3D) | (T4A) | (T4B) | (T4C) | (T4D) | (T5A) | (T5B) | (T5C) | (T5D) |
| Acetone extractable content (%) | 0.5 | 1.5 | 2.5 | 5.0 | 0.5 | 1.5 | 2.5 | 5.0 | 0.5 | 1.5 | 2.5 | 5.0 | 0.5 | 1.5 | 2.5 | 5.0 | 0.5 | 1.5 | 2.5 | 5.0 |
| Mw/Mn | 4.5 | | | | 4.3 | | | | 4.3 | | | | 4.6 | | | | 4.5 | | | |
| Mp ($\times 10^4$) | 39 | | | | 46 | | | | 44 | | | | 43 | | | | 43 | | | |
| Styrene content | 23.5 | | | | 23.5 | | | | 23.6 | | | | 23.4 | | | | 23.0 | | | |
| Polar group-containing monomer content | 0.04 | | | | 0.04 | | | | 0.04 | | | | 0.04 | | | | 0.04 | | | |

| | Rubber in MB | | | | | | | | | | | | | | | | | | | |
|---|---|---|---|---|---|---|---|---|---|---|---|---|---|---|---|---|---|---|---|---|
| | (T1a) | (T1b) | (T1c) | (T1d) | (T2a) | (T2b) | (T2c) | (T2d) | (T3a) | (T3b) | (T3c) | (T3d) | (T4a) | (T4b) | (T4c) | (T4d) | (T5a) | (T5b) | (T5c) | (T5d) |
| Soap content (%) | 0.1 | 0.5 | 1.0 | 2.0 | 0.1 | 0.5 | 1.0 | 2.0 | 0.1 | 0.5 | 1.0 | 2.0 | 0.1 | 0.5 | 1.0 | 2.0 | 0.1 | 0.5 | 1.0 | 2.0 |
| Organic acid content (%) | 0.1 | 0.5 | 1.5 | 3.0 | 0.1 | 0.5 | 1.5 | 3.0 | 0.1 | 0.5 | 1.5 | 3.0 | 0.1 | 0.5 | 1.5 | 3.0 | 0.1 | 0.5 | 1.5 | 3.0 |
| Mw/Mn | 4.5 | | | | 4.3 | | | | 4.3 | | | | 4.6 | | | | 4.5 | | | |
| Mp ($\times 10^4$) | 34 | | | | 41 | | | | 39 | | | | 39 | | | | 38 | | | |
| Styrene content | 23.5 | | | | 23.5 | | | | 23.6 | | | | 23.4 | | | | 23.0 | | | |
| Polar group-containing monomer content | 0.04 | | | | 0.04 | | | | 0.04 | | | | 0.04 | | | | 0.04 | | | |

<Examples and Comparative Examples>

Various chemicals used in the examples and the comparative examples are listed below.

NR: RSS#3
MB (T1A) to MB (T5D) and MB (T1a) to MB (T5d): MBs synthesized above
Emulsion-polymerized SBR: SBR1502 available from JSR Corporation
Carbon black N220: Shoblack N220 available from Cabot Japan K. K.
Silica: ULTRASIL VN3 available from Degussa
Silane coupling agent: Si69 available from Degussa
Oil: Process X-140 available from JX Nippon Oil & Energy Corporation
Stearic acid: stearic acid available from NOF Corporation
Zinc oxide: Zinc oxide #1 available from Mitsui Mining and Smelting Co., Ltd.
Antioxidant: Nocrac 6C available from Ouchi Shinko Chemical Industrial Co., Ltd.
Wax: Sunnoc wax available from Ouchi Shinko Chemical Industrial Co., Ltd.
Sulfur: powdered sulfur available from Tsurumi Chemical Industry Co., Ltd.
Vulcanization accelerator (1): Nocceler CZ available from Ouchi Shinko Chemical Industrial Co., Ltd.
Vulcanization accelerator (2): Nocceler D available from Ouchi Shinko Chemical Industrial Co., Ltd.

The chemicals according to the formulation shown in Tables 2-2 or 2-3 were mixed and kneaded to produce an unvulcanized rubber composition. The unvulcanized rubber composition was press-vulcanized at 170°C for 20 minutes to produce a vulcanized rubber composition.
The unvulcanized rubber composition and vulcanized rubber composition were evaluated for the fuel economy, wet-grip performance, abrasion resistance, and processability by the test methods described below.

(Fuel economy (Rolling resistance))

The tanδ of the vulcanized rubber composition was measured using a spectrometer available from Ueshima Seisakusho Co., Ltd. under a dynamic strain amplitude of 1%, a frequency of 10 Hz, and a temperature of 60°C, and expressed as an index using the equation below. A higher index value indicates a smaller rolling resistance, which in turn indicates excellent fuel economy.

(Fuel economy index) = (tanδ of Comparative Example 5-1)/(tanδ of each formulation) × 100

(Abrasion resistance)

The abrasion loss of the vulcanized rubber composition was measured using a Lambourn abrasion tester under room temperature, an applied load of 1.0 kgf, and a slip ratio of 30%, and expressed as an index using the equation below. A higher index value indicates better abrasion resistance.

(Abrasion resistance index) = (Abrasion loss of Comparative Example 5-1)/(Abrasion loss of each formulation) × 100

(Wet-grip performance)

The wet-grip performance was evaluated using a flat belt friction tester (FR5010 Series) available from Ueshima Seisakusho Co., Ltd. A cylindrical rubber test piece having a width of 20 mm and a diameter of 100 mm prepared from the vulcanized rubber composition was used as a sample. The slip ratio of the sample on a road surface was changed in the range of 0 to 70% under a speed of 20 km/hour, a load of 4 kgf, and a road surface temperature of 20°C, and the maximum of the friction coefficients monitored with that range was read and expressed as an index using the equation below. A higher index value indicates better wet-grip performance.

(Wet-grip performance index) = (Maximum of friction coefficients of each formulation)/(maximum of friction coefficients of Comparative Example 5-1) × 100

(Processability)

The Mooney viscosity ($ML_{1+4}$/130°C) of the unvulcanized rubber composition was determined in conformity with JIS K 6300-1 "Rubber, unvulcanized - Physical property - Part 1: Determination of Mooney viscosity and pre-vulcanization characteristics with Mooney viscometer". Specifically, a Mooney viscosity tester was preheated for 1 minute up to 130°C and a small rotor was rotated under this temperature condition. After 4-minute rotation, the Mooney viscosity ($ML_{1+4}$/130°C) of the unvulcanized rubber composition was measured. The values are expressed as an index using the equation below. A higher index value indicates a lower viscosity, which in turn indicates better processability.

(Processability index) = (Mooney viscosity of Comparative Example 5-1)/(Mooney viscosity of each formulation) × 100

[Table 2-2]

Tread

| | | | Example | | | | | | | | | | | | | | | Comparative Example | | | | | |
|---|---|---|---|---|---|---|---|---|---|---|---|---|---|---|---|---|---|---|---|---|---|---|---|
| | | | 5-1 | 5-2 | 5-3 | 5-4 | 5-5 | 5-6 | 5-7 | 5-8 | 5-9 | 5-10 | 5-11 | 5-12 | 5-13 | 5-14 | 5-15 | 5-1 | 5-2 | 5-3 | 5-4 | 5-5 | 5-6 |
| Formulation (parts by mass) | NR | | 30 | 30 | 30 | 30 | 30 | 30 | 30 | 30 | 30 | 30 | 30 | 30 | 30 | 30 | 30 | 30 | 30 | 30 | 30 | 30 | 30 |
| | MB | Number | (T1A) | (T1B) | (T1C) | (T2A) | (T2B) | (T2C) | (T3A) | (T3B) | (T3C) | (T4A) | (T4B) | (T4C) | (T5A) | (T5B) | (T5C) | — | (T1D) | (T2D) | (T3D) | (T4D) | (T5D) |
| | | Amount | 100 (Rubber 70, CB 30) | 100 (Rubber 70, CB 30) | 100 (Rubber 70, CB 30) | 100 (Rubber 70, CB 30) | 100 (Rubber 70, CB 30) | 100 (Rubber 70, CB 30) | 100 (Rubber 70, CB 30) | 100 (Rubber 70, CB 30) | 100 (Rubber 70, CB 30) | 100 (Rubber 70, CB 30) | 100 (Rubber 70, CB 30) | 100 (Rubber 70, CB 30) | 100 (Rubber 70, CB 30) | 100 (Rubber 70, CB 30) | 100 (Rubber 70, CB 30) | — | 100 (Rubber 70, CB 30) | 100 (Rubber 70, CB 30) | 100 (Rubber 70, CB 30) | 100 (Rubber 70, CB 30) | 100 (Rubber 70, CB 30) |
| | Emulsion-polymerized SBR | | — | — | — | — | — | — | — | — | — | — | — | — | — | — | — | 70 | — | — | — | — | — |
| | Carbon black N220 | | — | — | — | — | — | — | — | — | — | — | — | — | — | — | — | 30 | — | — | — | — | — |
| | Silica | | 30 | 30 | 30 | 30 | 30 | 30 | 30 | 30 | 30 | 30 | 30 | 30 | 30 | 30 | 30 | 30 | 30 | 30 | 30 | 30 | 30 |
| | Silane coupling agent | | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 |
| | Oil | | 5 | 5 | 5 | 5 | 5 | 5 | 5 | 5 | 5 | 5 | 5 | 5 | 5 | 5 | 5 | 5 | 5 | 5 | 5 | 5 | 5 |
| | Stearic acid | | 2 | 2 | 2 | 2 | 2 | 2 | 2 | 2 | 2 | 2 | 2 | 2 | 2 | 2 | 2 | 2 | 2 | 2 | 2 | 2 | 2 |
| | Zinc oxide | | 3 | 3 | 3 | 3 | 3 | 3 | 3 | 3 | 3 | 3 | 3 | 3 | 3 | 3 | 3 | 3 | 3 | 3 | 3 | 3 | 3 |
| | Antioxidant | | 1 | 1 | 1 | 1 | 1 | 1 | 1 | 1 | 1 | 1 | 1 | 1 | 1 | 1 | 1 | 1 | 1 | 1 | 1 | 1 | 1 |
| | Wax | | 1 | 1 | 1 | 1 | 1 | 1 | 1 | 1 | 1 | 1 | 1 | 1 | 1 | 1 | 1 | 1 | 1 | 1 | 1 | 1 | 1 |
| | Sulfur | | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator (1) | | 1 | 1 | 1 | 1 | 1 | 1 | 1 | 1 | 1 | 1 | 1 | 1 | 1 | 1 | 1 | 1 | 1 | 1 | 1 | 1 | 1 |
| | Vulcanization accelerator (2) | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Evaluation | Fuel economy index | | 109 | 108 | 106 | 111 | 108 | 107 | 111 | 109 | 107 | 112 | 110 | 108 | 113 | 111 | 110 | 100 | 104 | 104 | 105 | 106 | 107 |
| | Wet-grip performance index | | 104 | 104 | 103 | 105 | 104 | 103 | 105 | 104 | 103 | 105 | 104 | 102 | 105 | 103 | 102 | 100 | 102 | 102 | 102 | 102 | 102 |
| | Abrasion resistance index | | 106 | 104 | 104 | 109 | 108 | 107 | 110 | 108 | 107 | 111 | 110 | 106 | 112 | 111 | 107 | 100 | 102 | 106 | 105 | 105 | 106 |
| | Processability index | | 102 | 103 | 103 | 101 | 102 | 102 | 101 | 102 | 102 | 100 | 101 | 101 | 99 | 100 | 100 | 100 | 103 | 102 | 102 | 102 | 100 |

[Table 2-3]

Tread

| | | | Example | | | | | | | | | | | | | | | Comparative Example | | | | | |
|---|---|---|---|---|---|---|---|---|---|---|---|---|---|---|---|---|---|---|---|---|---|---|---|
| | | | 5-16 | 5-17 | 5-18 | 5-19 | 5-20 | 5-21 | 5-22 | 5-23 | 5-24 | 5-25 | 5-26 | 5-27 | 5-28 | 5-29 | 5-30 | 5-1 | 5-7 | 5-8 | 5-9 | 5-10 | 5-11 |
| Formulation (parts by mass) | NR | | 30 | 30 | 30 | 30 | 30 | 30 | 30 | 30 | 30 | 30 | 30 | 30 | 30 | 30 | 30 | 30 | 30 | 30 | 30 | 30 | 30 |
| | MB | Number | (T1a) | (T1b) | (T1c) | (T2a) | (T2b) | (T2c) | (T3a) | (T3b) | (T3c) | (T4a) | (T4b) | (T4c) | (T5a) | (T5b) | (T5c) | — | (T1d) | (T2d) | (T3d) | (T4d) | (T5d) |
| | | Amount | 100 (Rubber 70, CB 30) | 100 (Rubber 70, CB 30) | 100 (Rubber 70, CB 30) | 100 (Rubber 70, CB 30) | 100 (Rubber 70, CB 30) | 100 (Rubber 70, CB 30) | 100 (Rubber 70, CB 30) | 100 (Rubber 70, CB 30) | 100 (Rubber 70, CB 30) | 100 (Rubber 70, CB 30) | 100 (Rubber 70, CB 30) | 100 (Rubber 70, CB 30) | 100 (Rubber 70, CB 30) | 100 (Rubber 70, CB 30) | 100 (Rubber 70, CB 30) | — | 100 (Rubber 70, CB 30) | 100 (Rubber 70, CB 30) | 100 (Rubber 70, CB 30) | 100 (Rubber 70, CB 30) | 100 (Rubber 70, CB 30) |
| | Emulsion-polymerized SBR | | — | — | — | — | — | — | — | — | — | — | — | — | — | — | — | 70 | — | — | — | — | — |
| | Carbon black N220 | | — | — | — | — | — | — | — | — | — | — | — | — | — | — | — | 30 | — | — | — | — | — |
| | Silica | | 30 | 30 | 30 | 30 | 30 | 30 | 30 | 30 | 30 | 30 | 30 | 30 | 30 | 30 | 30 | 30 | 30 | 30 | 30 | 30 | 30 |
| | Silane coupling agent | | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 |
| | Oil | | 5 | 5 | 5 | 5 | 5 | 5 | 5 | 5 | 5 | 5 | 5 | 5 | 5 | 5 | 5 | 5 | 5 | 5 | 5 | 5 | 5 |
| | Stearic acid | | 2 | 2 | 2 | 2 | 2 | 2 | 2 | 2 | 2 | 2 | 2 | 2 | 2 | 2 | 2 | 2 | 2 | 2 | 2 | 2 | 2 |
| | Zinc oxide | | 3 | 3 | 3 | 3 | 3 | 3 | 3 | 3 | 3 | 3 | 3 | 3 | 3 | 3 | 3 | 3 | 3 | 3 | 3 | 3 | 3 |
| | Antioxidant | | 1 | 1 | 1 | 1 | 1 | 1 | 1 | 1 | 1 | 1 | 1 | 1 | 1 | 1 | 1 | 1 | 1 | 1 | 1 | 1 | 1 |
| | Wax | | 1 | 1 | 1 | 1 | 1 | 1 | 1 | 1 | 1 | 1 | 1 | 1 | 1 | 1 | 1 | 1 | 1 | 1 | 1 | 1 | 1 |
| | Sulfur | | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator (1) | | 1 | 1 | 1 | 1 | 1 | 1 | 1 | 1 | 1 | 1 | 1 | 1 | 1 | 1 | 1 | 1 | 1 | 1 | 1 | 1 | 1 |
| | Vulcanization accelerator (2) | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Evaluation | Fuel economy index | | 107 | 106 | 105 | 108 | 107 | 106 | 107 | 106 | 105 | 111 | 107 | 106 | 111 | 108 | 107 | 100 | 102 | 102 | 103 | 104 | 105 |
| | Wet-grip performance index | | 104 | 103 | 103 | 104 | 104 | 102 | 104 | 103 | 102 | 105 | 104 | 103 | 106 | 105 | 104 | 100 | 102 | 102 | 102 | 103 | 103 |
| | Abrasion resistance index | | 105 | 102 | 102 | 107 | 105 | 103 | 107 | 105 | 104 | 109 | 106 | 105 | 110 | 107 | 106 | 100 | 101 | 102 | 102 | 103 | 103 |
| | Processability index | | 102 | 102 | 103 | 101 | 102 | 102 | 101 | 101 | 102 | 101 | 102 | 103 | 100 | 100 | 100 | 100 | 103 | 103 | 103 | 103 | 101 |

Each example in which carbon black and silica were added to a modified emulsion-polymerized SBR with a reduced acetone extractable content or a modified emulsion-polymerized SBR with reduced soap and organic acid contents achieves not only excellent processability but also a balanced improvement in fuel economy, wet-grip performance, and abrasion resistance. In particular, such effects are proved to be remarkably achieved when an MB is used.

[Sidewall]

Chemicals used for producing an MB are listed below.

Emulsifier (1): rosin acid soap available from Harima Chemicals, Inc.
Emulsifier (2): fatty acid soap available from Wako Pure Chemical Industries, Ltd.
Electrolyte: sodium phosphate available from Wako Pure Chemical Industries, Ltd.
Styrene: styrene available from Wako Pure Chemical Industries, Ltd.
Butadiene: 1,3-butadiene available from Takachiho Chemical Industrial Co., Ltd.
Molecular weight regulator: tert-dodecyl mercaptan available from Wako Pure Chemical Industries, Ltd.
Radical initiator: paramenthane hydroperoxide available from NOF Corporation
SFS: sodium formaldehyde sulfoxylate available from Wako Pure Chemical Industries, Ltd.
EDTA: sodium ethylenediaminetetraacetate available from Wako Pure Chemical Industries, Ltd.
Catalyst: ferric sulfate available from Wako Pure Chemical Industries, Ltd.
Polymerization terminator: N,N'-dimethyl dithiocarbamate available from Wako Pure Chemical Industries, Ltd.
Alcohol: methanol or ethanol available from Kanto Chemical Co., Inc.
Formic acid: formic acid available from Kanto Chemical Co., Inc.
Sodium chloride: sodium chloride available from Wako Pure Chemical Industries, Ltd.
Carbon black N550: Shoblack N550 available from Cabot Japan K. K.
DEMOL N: surfactant DEMOL N (sodium salt of formalin condensate of β-naphthalene sulfonate (anionic surfactant)) available from Kao Corporation
Aqueous sodium carbonate solution: sodium carbonate (concentration: 0.15% by mass) available from Wako Pure Chemical Industries, Ltd.
Tetrakis[methylene-3-(3',5'-di-tert-butyl-4'-hydroxyphenyl)propionate]methane: Irganox1010 available from BASF Japan, Ltd.

<Production of MB (S1)>

(Production of emulsion-polymerized rubber)

An amount of 2000 g of distilled water, 45 g of the emulsifier (1), 1.5 g of the emulsifier (2), 8 g of the electrolyte, 250 g of the styrene, 750 g of the butadiene, and 2 g of the molecular weight regulator were charged into a pressure-resistant reactor provided with a stirrer. The reactor temperature was set to 5°C. An aqueous solution containing 1 g of the radical initiator and 1.5 g of the SFS and an aqueous solution containing 0.7 g of the EDTA and 0.5 g of the catalyst were added to the reactor, so that the polymerization was initiated. Five hours after the initiation of polymerization, 2 g of the polymerization terminator was added to stop the reaction, whereby latex was prepared.

Unreacted monomers were removed from the latex by steam distillation. Then, the latex was added to the alcohol and coagulated by adding a saturated aqueous sodium chloride or the formic acid while adjusting the pH to 3 to 5 to give a crumb polymer. The polymer was dried with a vacuum dryer at 40°C, whereby a solid rubber (emulsion-polymerized rubber) was obtained.

(Polymer (1))

An amount of 100 g of the emulsion-polymerized rubber and 1.0 L of toluene were placed in a 2-L glass separable flask, and warmed to 60°C with stirring to completely dissolve the emulsion-polymerized rubber. After complete dissolution, the solution of the emulsion-polymerized rubber in toluene was cooled to room temperature and filtered through a metal 250-mesh, followed by addition of 1.5 L of methanol to precipitate the rubber component. A series of dissolution by toluene and precipitation with methanol was again repeated, four times in total, so that the agents for emulsion polymerization and the like contained in the emulsion-polymerized rubber were extracted. The resulting emulsion-polymerized rubber was kneaded together with tetrakis[methylene-3-(3',5'-di-tert-butyl-4'-hydroxyphenyl)propionate]methane as an antioxidant in an amount of 1000 ppm based on the emulsion-polymerized rubber. The mixture was dried at 100°C for one hour to give a polymer (1). The acetone extractable content in the polymer (1) was 0.5% by mass when determined by an acetone extraction method in conformity with JIS K 6350.

The polymer (1) and carbon black N550 at a mass ratio of 30:30 were kneaded with a Banbury mixer to give a MB (S1).

<Production of MB (S2)>

MB (S2) was prepared in the same manner as described for the MB (S1), except that the reprecipitation was performed three times in total. The acetone extractable content was 1.5% by mass.

<Production of MB (S3)>

MB (S3) was prepared in the same manner as described for the MB (S1), except that the reprecipitation was performed twice in total. The acetone extractable content was 2.5% by mass.

<Production of MB (S4)>

MB (S4) was prepared in the same manner as described for the MB (S1), except that the reprecipitation was performed once. The acetone extractable content was 5.0% by mass.

<Production of MB (S5)>

(Preparation of emulsion-polymerized rubber latex)

An amount of 2000 g of distilled water, 45 g of the emulsifier (1), 1.5 g of the emulsifier (2), 8 g of the electrolyte, 250 g of the styrene, 750 g of the butadiene, and 2 g of the molecular weight regulator were charged into a pressure-resistant reactor provided with a stirrer. The reactor temperature was set to 5°C. An aqueous solution containing 1 g of the radical initiator and 1.5 g of the SFS and an aqueous solution containing 0.7 g of the EDTA and 0.5 g of the catalyst were added to the reactor, so that the polymerization was initiated. Five hours after the initiation of polymerization, 2 g of the polymerization terminator was added to stop the reaction, whereby an emulsion-polymerized rubber latex was prepared.

(Preparation of carbon black N550 dispersion)

An amount of 1900 g of deionized water and 100 g of carbon black N550 were placed in a colloid mill having a rotor diameter of 30 mm, and they were stirred with a rotor-stator gap of 1 mm at a rotational speed of 2000 rpm for 10 minutes. Subsequently, DEMOL N was added until its concentration reached 0.05% by mass. The mixture was circulated three times using a pressure homogenizer to prepare a carbon black N550 dispersion.

(Mixing, coagulation, and drying of emulsion-polymerized rubber latex and carbon black N550 dispersion)

The emulsion-polymerized rubber latex and the carbon black N550 dispersion were mixed in a solids content ratio (mass ratio) of rubber component: carbon black N550 of 30:30. After the mixture was homogenized, sulfuric acid was added thereto with stirring until the pH of the mixture reached 5 to be coagulated. The coagulum was filtered to collect a

rubber fraction. The rubber fraction was washed with pure water until the liquid after the washing (washing water) had a pH of 7, followed by drying, so that a composite (composite of the emulsion-polymerized rubber and carbon black N550) was obtained.

(MB (S5))

An amount of 100 g of the composite and 1.0 L of an aqueous sodium carbonate solution were placed in a 2-L glass separable flask, and warmed to 60°C, followed by stirring for 15 minutes and cooling to room temperature. A resulting dispersion of the composite was filtered through a metal 250-mesh. The washing operation of stirring with the aqueous sodium carbonate solution and filtration was again repeated, four times in total, so that the soap component and the organic acid component contained in the composite were extracted. The resulting composite was kneaded together with tetrakis[methylene-3-(3' ,5'-di-tert-butyl-4'-hydroxyphenyl) propionate]methane as an antioxidant in an amount of 1000 ppm based on the composite. The mixture was dried at 100°C for one hour to give a MB (S5). The soap content and the organic acid content in the MB (S5) were both 0.1% by mass when determined in conformity with JIS K 6237.

<Production of MB (S6)>

A MB (S6) was prepared in the same manner as described for the MB (S5), except that the series of washing and filtration was performed three times in total. The soap content and the organic acid content were both 0.5% by mass.

<Production of MB (S7)>

A MB (S7) was prepared in the same manner as described for the MB (S5), except that the series of washing and filtration was performed twice in total. The soap content and the organic acid content were 1.0% by mass and 1.5% by mass, respectively.

<Production of MB (S8)>

A MB (S8) was prepared in the same manner as described for the MB (S5), except that the series of washing and filtration was performed once. The soap content and the organic acid content were 2.0% by mass and 3.0% by mass, respectively.

<Analysis of rubber in MB>

The results of analysis of other features of the MBs were substantially the same as those shown in Table 1.

<Examples and Comparative Examples>

Various chemicals used in the examples and the comparative examples are listed below.

NR: RSS#3
BR: BR150B available from Ube Industries, Ltd.
MB (S1) to (S8): MBs prepared above
Emulsion-polymerized SBR: SBR1502 available from JSR Corporation
Carbon black N550: N550 available from Cabot Japan K. K.
Silica: ULTRASIL VN3 available from Degussa
Silane coupling agent: Si69 available from Degussa
Oil: Process X-140 available from JX Nippon Oil & Energy Corporation
Stearic acid: stearic acid available from NOF Corporation
Zinc oxide: Zinc oxide #1 available from Mitsui Mining and Smelting Co., Ltd.
Antioxidant: Nocrac 6C available from Ouchi Shinko Chemical Industrial Co., Ltd.
Wax: Sunnoc wax available from Ouchi Shinko Chemical Industrial Co., Ltd.
Sulfur: powdered sulfur available from Tsurumi Chemical Industry Co., Ltd.
Vulcanization accelerator: Nocceler NS available from Ouchi Shinko Chemical Industrial Co., Ltd.

The chemicals according to the formulation shown in Table 3 were mixed and kneaded to produce an unvulcanized rubber composition. The unvulcanized rubber composition was press-vulcanized at 170°C for 20 minutes to produce a vulcanized rubber composition.

The unvulcanized rubber composition and vulcanized rubber composition were evaluated for the fuel economy, flex crack growth resistance, and processability by the test methods described below.

(Fuel economy (Rolling resistance))

The tanδ of the vulcanized rubber composition was measured using a spectrometer available from Ueshima Seisakusho Co., Ltd. under a dynamic strain amplitude of 1%, a frequency of 10 Hz, and a temperature of 60°C, and expressed as an index using the equation below. A higher index value indicates a smaller rolling resistance, which in turn indicates excellent fuel economy.

(Fuel economy index) = (tanδ of Comparative Example 6-1) /(tanδ of each formulation) × 100

(Flex crack growth resistance)

A sample was prepared from the vulcanized rubber composition in conformity with JIS K 6260 "Rubber, vulcanized or thermoplastic -- Determination of flex cracking and crack growth (De Mattia type)", and subjected to a flex crack growth resistance test. Specifically, the sample was stretched by 70% for one million times to be flexed, and the length of a crack formed was measured. The values are expressed as an index using the equation below, with a reciprocal of the value (length) of Comparative Example 6-1 set equal to 100. A higher index indicates better suppression of crack growth, which in turn indicates higher flex crack growth resistance.

(Crack growth resistance index) = (Measured value of Comparative Example 6-1)/ (Measured value of each formulation) × 100

(Processability)

The Mooney viscosity ($ML_{1+4}$/130°C) of the unvulcanized rubber composition was determined in conformity with JIS K 6300-1 "Rubber, unvulcanized - Physical property - Part 1: Determination of Mooney viscosity and pre-vulcanization characteristics with Mooney viscometer". Specifically, a Mooney viscosity tester was preheated for 1 minute up to 130°C and a small rotor was rotated under this temperature condition. After 4-minute rotation, the Mooney viscosity ($ML_{1+4}$/130°C) of the unvulcanized rubber composition was measured. The values are expressed as an index using the equation below. A higher index value indicates a lower viscosity, which in turn indicates better processability.

(Processability index) = (Mooney viscosity of Comparative Example 6-1)/(Mooney viscosity of each formulation) × 100

[Table 3]

Sidewall

| | | | Example | | | | | | Comparative Example | | |
|---|---|---|---|---|---|---|---|---|---|---|---|
| | | | 6-1 | 6-2 | 6-3 | 6-4 | 6-5 | 6-6 | 6-1 | 6-2 | 6-3 |
| Formulation (parts by mass) | NR | | 40 | 40 | 40 | 40 | 40 | 40 | 40 | 40 | 40 |
| | BR | | 30 | 30 | 30 | 30 | 30 | 30 | 30 | 30 | 30 |
| | MB | Number | (S1) | (S2) | (S3) | (S5) | (S6) | (S7) | — | (S4) | (S8) |
| | | Amount | 60 (Rubber 30, CB 30) | 60 (Rubber 30, CB 30) | 60 (Rubber 30, CB 30) | 60 (Rubber 30, CB 30) | 60 (Rubber 30, CB 30) | 60 (Rubber 30, CB 30) | — | 60 (Rubber 30, CB 30) | 60 (Rubber 30, CB 30) |
| | Emulsion-polymerized SBR | | — | — | — | — | — | — | 30 | — | — |
| | Carbon black N550 | | — | — | — | — | — | — | 30 | — | — |
| | Silica | | 30 | 30 | 30 | 30 | 30 | 30 | 30 | 30 | 30 |
| | Silane coupling agent | | 2.4 | 2.4 | 2.4 | 2.4 | 2.4 | 2.4 | 2.4 | 2.4 | 2.4 |
| | Oil | | 5 | 5 | 5 | 5 | 5 | 5 | 5 | 5 | 5 |
| | Stearic acid | | 3 | 3 | 3 | 3 | 3 | 3 | 3 | 3 | 3 |
| | Zinc oxide | | 3 | 3 | 3 | 3 | 3 | 3 | 3 | 3 | 3 |
| | Antioxidant | | 2 | 2 | 2 | 2 | 2 | 2 | 2 | 2 | 2 |
| | Wax | | 2 | 2 | 2 | 2 | 2 | 2 | 2 | 2 | 2 |
| | Sulfur | | 2 | 2 | 2 | 2 | 2 | 2 | 2 | 2 | 2 |
| | Vulcanization accelerator | | 1 | 1 | 1 | 1 | 1 | 1 | 1 | 1 | 1 |
| Evaluation | Fuel economy index | | 103 | 103 | 102 | 103 | 103 | 102 | 100 | 101 | 101 |
| | Crack growth resistance index | | 109 | 108 | 104 | 108 | 105 | 103 | 100 | 101 | 101 |
| | Processability index | | 100 | 100 | 101 | 100 | 100 | 101 | 100 | 102 | 102 |

Each example in which carbon black and silica were added to an emulsion-polymerized SBR with a reduced acetone extractable content or an emulsion-polymerized SBR with reduced soap and organic acid contents achieves not only excellent processability but also a balanced improvement in fuel economy and flex fatigue resistance (crack growth resistance). In particular, such effects are proved to be remarkably achieved when an MB is used.

[Internal component]

Chemicals used for producing an MB are listed below.

Emulsifier (1): rosin acid soap available from Harima Chemicals, Inc.
Emulsifier (2): fatty acid soap available from Wako Pure Chemical Industries, Ltd.
Electrolyte: sodium phosphate available from Wako Pure Chemical Industries, Ltd.
Styrene: styrene available from Wako Pure Chemical Industries, Ltd.
Butadiene: 1,3-butadiene available from Takachiho Chemical Industrial Co., Ltd.
Molecular weight regulator: tert-dodecyl mercaptan available from Wako Pure Chemical Industries, Ltd.
Radical initiator: paramenthane hydroperoxide available from NOF Corporation
SFS: sodium formaldehyde sulfoxylate available from Wako Pure Chemical Industries, Ltd.
EDTA: sodium ethylenediaminetetraacetate available from Wako Pure Chemical Industries, Ltd.
Catalyst: ferric sulfate available from Wako Pure Chemical Industries, Ltd.
Polymerization terminator: N,N'-dimethyl dithiocarbamate available from Wako Pure Chemical Industries, Ltd.
Alcohol: methanol or ethanol available from Kanto Chemical Co., Inc.
Formic acid: formic acid available from Kanto Chemical Co., Inc.
Sodium chloride: sodium chloride available from Wako Pure Chemical Industries, Ltd.
Carbon black N550: Shoblack N550 available from Cabot Japan K. K.
DEMOL N: surfactant DEMOL N (sodium salt of formalin condensate of β-naphthalene sulfonate (anionic surfactant)) available from Kao Corporation
Aqueous sodium carbonate solution: sodium carbonate (concentration: 0.15% by mass) available from Wako Pure Chemical Industries, Ltd.
Tetrakis[methylene-3-(3' ,5'-di-tert-butyl-4'-hydroxyphenyl)propionate]methane: Irganox1010 available from BASF Japan, Ltd.

<Production of MB (C1)>

(Production of emulsion-polymerized rubber)

An amount of 2000 g of distilled water, 45 g of the emulsifier (1), 1.5 g of the emulsifier (2), 8 g of the electrolyte, 250 g of the styrene, 750 g of the butadiene, and 2 g of the molecular weight regulator were charged into a pressure-resistant reactor provided with a stirrer. The reactor temperature was set to 5°C. An aqueous solution containing 1 g of the radical initiator and 1.5 g of the SFS and an aqueous solution containing 0.7 g of the EDTA and 0.5 g of the catalyst were added to the reactor, so that the polymerization was initiated. Five hours after the initiation of polymerization, 2 g of the polymerization terminator was added to stop the reaction, whereby latex was prepared.

Unreacted monomers were removed from the latex by steam distillation. Then, the latex was added to the alcohol and coagulated by adding a saturated aqueous sodium chloride or the formic acid while adjusting the pH to 3 to 5 to give a crumb polymer. The polymer was dried with a vacuum dryer at 40°C, whereby a solid rubber (emulsion-polymerized rubber) was obtained.

(Polymer (1))

An amount of 100 g of the emulsion-polymerized rubber and 1.0 L of toluene were placed in a 2-L glass separable flask, and warmed to 60°C with stirring to completely dissolve the emulsion-polymerized rubber. After complete dissolution, the solution of the emulsion-polymerized rubber in toluene was cooled to room temperature and filtered through a metal 250-mesh, followed by addition of 1.5 L of methanol to precipitate the rubber component. A series of dissolution by toluene and precipitation with methanol was again repeated, four times in total, so that the agents for emulsion polymerization and the like contained in the emulsion-polymerized rubber were extracted. The resulting emulsion-polymerized rubber was kneaded together with tetrakis[methylene-3-(3',5'-di-tert-butyl-4'-hydroxyphenyl)propionate]methane as an antioxidant in an amount of 1000 ppm based on the emulsion-polymerized rubber. The mixture was dried at 100°C for one hour to give a polymer (1). The acetone extractable content in the polymer (1) was 0.5% by mass when determined by an acetone extraction method in conformity with JIS K 6350.

(MB (C1))

The polymer (1) and carbon black N550 at a mass ratio of 30:30 were kneaded with a Banbury mixer to give a MB (C1).

<Production of MB (C2)>

A MB (C2) was prepared in the same manner as described for the MB (C1), except that the reprecipitation was performed three times in total. The acetone extractable content was 1.5% by mass.

<Production of MB (C3)>

A MB (C3) was prepared in the same manner as described for the MB (C1), except that the reprecipitation was performed twice in total. The acetone extractable content was 2.5% by mass.

<Production of MB (C4)>

A MB (C4) was prepared in the same manner as described for the MB (C1), except that the reprecipitation was performed once. The acetone extractable content was 5.0% by mass.

<Production of MB (C5)>

(Preparation of emulsion-polymerized rubber latex)

An amount of 2000 g of distilled water, 45 g of the emulsifier (1), 1.5 g of the emulsifier (2), 8 g of the electrolyte, 250 g of the styrene, 750 g of the butadiene, and 2 g of the molecular weight regulator were charged into a pressure-resistant reactor provided with a stirrer. The reactor temperature was set to 5°C. An aqueous solution containing 1 g of the radical initiator and 1.5 g of the SFS and an aqueous solution containing 0.7 g of the EDTA and 0.5 g of the catalyst were added to the reactor, so that the polymerization was initiated. Five hours after the initiation of polymerization, 2 g of the polymerization terminator was added to stop the reaction, and unreacted monomers were removed by steam distillation,

whereby an emulsion-polymerized rubber latex was prepared.

(Preparation of carbon black N550 dispersion)

An amount of 1900 g of deionized water and 100 g of carbon black N550 were placed in a colloid mill having a rotor diameter of 30 mm, and they were stirred with a rotor-stator gap of 1 mm at a rotational speed of 2000 rpm for 10 minutes. Subsequently, DEMOL N was added until its concentration reached 0.05% by mass. The mixture was circulated three times using a pressure homogenizer to prepare a carbon black N550 dispersion.

(Mixing, coagulation, and drying of emulsion-polymerized rubber latex and carbon black N550 dispersion)

The emulsion-polymerized rubber latex and the carbon black N550 dispersion were mixed in a solids content ratio (mass ratio) of rubber component: carbon black N550 of 30:30. After the mixture was homogenized, sulfuric acid was added thereto with stirring until the pH of the mixture reached 5 to be coagulated. The coagulum was filtered to collect a rubber fraction. The rubber fraction was washed with pure water until the liquid after the washing (washing water) had a pH of 7, followed by drying, so that a composite (composite of the emulsion-polymerized rubber and carbon black N550) was obtained.

(MB (C5))

An amount of 100 g of the composite and 1.0 L of an aqueous sodium carbonate solution were placed in a 2-L glass separable flask, and warmed to 60°C, followed by stirring for 15 minutes and cooling to room temperature. A resulting dispersion of the composite was filtered through a metal 250-mesh. The washing operation of stirring with the aqueous sodium carbonate solution and filtration was again repeated, four times in total, so that the soap component and the organic acid component contained in the composite were extracted. The resulting composite was kneaded together with tetrakis[methylene-3-(3' ,5'-di-tert-butyl-4'-hydroxyphenyl) propionate]methane as an antioxidant in an amount of 1000 ppm based on the composite. The mixture was dried at 100°C for one hour to give a MB (5). The soap content and the organic acid content in the MB (C5) were both 0.1% by mass when determined in conformity with JIS K 6237.

<Production of MB (C6)>

A MB (C6) was prepared in the same manner as described for the MB (C5), except that the series of washing and filtration was performed three times in total. The soap content and the organic acid content were both 0.5% by mass.

<Production of MB (C7)>

A MB (C7) was prepared in the same manner as described for the MB (C5), except that the series of washing and filtration was performed twice in total. The soap content and the organic acid content were 1.0% by mass and 1.5% by mass, respectively.

<Production of MB (C8)>

A MB (C8) was prepared in the same manner as described for the MB (C5), except that the series of washing and filtration was performed once. The soap content and the organic acid content were 2.0% by mass and 3.0% by mass, respectively.

<Analysis of rubber in MB>

The results of analysis of other features of the MBs were substantially the same as those shown in Table 1.

<Examples and Comparative Examples>

Various chemicals used in the examples and the comparative examples are listed below.

NR: RSS#3
MB (C1) to MB (C8): MBs prepared above
Emulsion-polymerized SBR: SBR1502 available from JSR Corporation
Carbon black N550: Shoblack N550 available from Cabot Japan K. K.

Silica: ULTRASIL VN3 available from Degussa
Silane coupling agent: Si69 available from Degussa
Oil: Process X-140 available from JX Nippon Oil & Energy Corporation
Stearic acid: stearic acid available from NOF Corporation
Zinc oxide: Zinc oxide #1 available from Mitsui Mining and Smelting Co., Ltd.
Antioxidant: Nocrac 6C available from Ouchi Shinko Chemical Industrial Co., Ltd.
Wax: Sunnoc wax available from Ouchi Shinko Chemical Industrial Co., Ltd.
Sulfur: powdered sulfur available from Tsurumi Chemical Industry Co., Ltd.
Vulcanization accelerator: Nocceler NS available from Ouchi Shinko Chemical Industrial Co., Ltd.

The chemicals according to the formulation shown in Table 4 were mixed and kneaded to produce an unvulcanized rubber composition. The unvulcanized rubber composition was press-vulcanized at 170°C for 20 minutes to produce a vulcanized rubber composition.

The unvulcanized rubber composition and vulcanized rubber composition were evaluated for the fuel economy, durability, tensile strength, and processability by the test methods described below.

(Fuel economy (Rolling resistance))

The tanδ of the vulcanized rubber composition was measured using a spectrometer available from Ueshima Seisakusho Co., Ltd. under a dynamic strain amplitude of 1%, a frequency of 10 Hz, and a temperature of 60°C, and expressed as an index using the equation below. A higher index value indicates a smaller rolling resistance, which in turn indicates excellent fuel economy.

(Fuel economy index) = (tanδ of Comparative Example 7-1)/(tanδ of each formulation) × 100

(Tensile test)

<Tensile strength index>

A tensile test was performed using a test sample (No. 3 dumbbell) cutting out of the vulcanized rubber composition in conformity with JIS K 6251 "Rubber, vulcanized or thermoplastics - Determination of tensile stress-strain properties" to measure the elongation at break (EB) and the tensile strength at break (TB) of the test sample of the vulcanized rubber composition. The EB values of the compositions are expressed as an index using the equation below, with the EB index of Comparative Example 7-1 set equal to 100. A higher EB index indicates better durability.

(EB index) = (EB of each formulation) / (EB of Comparative Example 7-1) × 100

Further, the EB × TB values of the compositions are expressed as an index using the equation below, with the EB × TB index of Comparative Example 1 set equal to 100. A higher EB × TB index indicates higher tensile strength.

(EB × TB index) = (EB × TB of each formulation)/(EB × TB of Comparative Example 7-1) × 100

(Processability)

The Mooney viscosity ($ML_{1+4}$/130°C) of the unvulcanized rubber composition was determined in conformity with JIS K 6300-1 "Rubber, unvulcanized - Physical property - Part 1: Determination of Mooney viscosity and pre-vulcanization characteristics with Mooney viscometer". Specifically, a Mooney viscosity tester was preheated for 1 minute up to 130°C and a small rotor was rotated under this temperature condition. After 4-minute rotation, the Mooney viscosity ($ML_{1+4/}$130°C) of the unvulcanized rubber composition was measured. The values are expressed as an index using the equation below. A higher index value indicates a lower viscosity, which in turn indicates better processability.

(Processability index) = (Mooney viscosity of Comparative Example 7-1)/(Mooney viscosity of each formulation) × 100

[Table 4]

Carcass ply

| | | | Example | | | | | | Comparative Example | | |
|---|---|---|---|---|---|---|---|---|---|---|---|
| | | | 7-1 | 7-2 | 7-3 | 7-4 | 7-5 | 7-6 | 7-1 | 7-2 | 7-3 |
| Formulation (parts by mass) | NR | | 70 | 70 | 70 | 70 | 70 | 70 | 70 | 70 | 70 |
| | NB | Number | (C1) | (C2) | (C3) | (C5) | (C6) | (C7) | — | (C4) | (C8) |
| | | Amount | 60 (Rubber 30, CB 30) | 60 (Rubber 30, CB 30) | 60 (Rubber 30, CB 30) | 60 (Rubber 30, CB 30) | 60 (Rubber 30, CB 30) | 60 (Rubber 30, CB 30) | — | 60 (Rubber 30, CB 30) | 60 (Rubber 30, CB 30) |
| | Emulsion-polymerized SBR | | — | — | — | — | — | — | 30 | — | — |
| | Carbon black N550 | | — | — | — | — | — | — | 30 | — | — |
| | Silica | | 40 | 40 | 40 | 40 | 40 | 40 | 40 | 40 | 40 |
| | Silane coupling agent | | 1.6 | 1.6 | 1.6 | 1.6 | 1.6 | 1.6 | 1.6 | 1.6 | 1.6 |
| | Oil | | 7 | 7 | 7 | 7 | 7 | 7 | 7 | 7 | 7 |
| | Stearic acid | | 2 | 2 | 2 | 2 | 2 | 2 | 2 | 2 | 2 |
| | Zinc oxide | | 5 | 5 | 5 | 5 | 5 | 5 | 5 | 5 | 5 |
| | Antioxidant | | 1 | 1 | 1 | 1 | 1 | 1 | 1 | 1 | 1 |
| | Wax | | 1 | 1 | 1 | 1 | 1 | 1 | 1 | 1 | 1 |
| | Sulfur | | 3 | 3 | 3 | 3 | 3 | 3 | 3 | 3 | 3 |
| | Vulcanization accelerator | | 1 | 1 | 1 | 1 | 1 | 1 | 1 | 1 | 1 |
| Evaluation | Fuel economy index | | 104 | 103 | 103 | 103 | 103 | 102 | 100 | 101 | 101 |
| | EB index | | 108 | 107 | 103 | 110 | 107 | 104 | 100 | 101 | 102 |
| | EB × TB index | | 108 | 105 | 104 | 111 | 109 | 105 | 100 | 102 | 102 |
| | Processability index | | 100 | 100 | 101 | 100 | 100 | 102 | 100 | 102 | 102 |

Each example (rubber compound for carcass plies) in which carbon black and silica were added to an emulsion-polymerized SBR with a reduced acetone extractable content or an emulsion-polymerized SBR with reduced soap and organic acid contents achieves not only excellent processability but also a balanced improvement in fuel economy and durability. In particular, such effects are proved to be remarkably achieved when an MB is used.

[Rubber masterbatch]

The materials used in the examples and comparative examples are listed below.

(Emulsion-polymerized rubber latex)

Prototype available from Mitsubishi Chemical Corporation: equivalent to "#1502" defined by the international institute of synthetic rubber producers (IISRP), styrene-butadiene rubber (SBR) latex (solids content: 22 to 23% by mass including fatty acid soap and resin acid soap (rosin acid soap) as residual emulsifiers, same quality as commercially available SBR (#1502))

(Carbon black A)

Prototype available from Mitsubishi Chemical Corporation: SAF carbon black, CTAB surface area: 180 $m^2/g$ or more, CTAB/IA ratio: 1.0 or more

(Carbon black B)

"N220" available from Mitsubishi Chemical Corporation: ISAF carbon black, CTAB surface area: 105 $m^2/g$, CTAB/IA ratio: 0.89

(Process oil)

"T-DAE" available from JX Nippon Oil & Energy: low aromatic oil

(Vulcanization accelerator)

"Sanceler NS-G" available from Sanshin Chemical Industry Co., Ltd.

(Example 8-1)

An amount of 56 kg of an aqueous dispersion containing 3.8% by mass of the carbon black A was vigorously stirred with a homogenizer to give a carbon black dispersion. The carbon black dispersion was mixed with 14.4 kg of the emulsion-polymerized rubber latex (SBR, solids content: 23.0% by mass) and 0.83 kg of the process oil. To the resulting mixture was added a mixed solution of an amine polymer flocculant (polyamine available from Tosoh Corporation) and sulfuric acid to adjust the pH to 4.0 for acid coagulation. Next, the dispersion medium forming the supernatant was removed so that a rubber masterbatch crumb was obtained.

An amount of 5 kg of the rubber masterbatch crumb was washed three times with 50 kg of a 60°C aqueous sodium carbonate solution adjusted to have a pH of 11, followed by repeating washing with 60°C warm water until the pH reached 7.0 to 7.5 (the dispersion immediately after the three-time washing with the aqueous sodium carbonate solution had a pH of 11). Next, the resulting product was dehydrated using an EXPELLER dehydrator available from Suehiro EPM Corporation, and then dried with 100°C hot air until the moisture content reached 2% by mass or less, thereby providing a rubber masterbatch.

The rubber masterbatch was found to contain 60 parts by mass of the carbon black and 25 parts by mass of the process oil relative to 100 parts by mass of the SBR when determined by the measurement method below. The organic acid content was 0.34% by mass when determined by the method below. The organic acid was a product converted during acid coagulation from a fatty acid soap and a resin acid soap which were contained as residual emulsifiers in the emulsion-polymerized rubber latex used as a material.

Subsequently, the rubber masterbatch was kneaded with stearic acid, sulfur, zinc oxide, and vulcanization accelerator in amounts according to the formulation in Table 5 using an open roll mill to give a rubber composition.

(Comparative Example 8-1)

A rubber masterbatch crumb was prepared as in Example 8-1. An amount of 5 kg of the rubber masterbatch crumb was washed with 50 kg of 60°C warm water without washing with an aqueous sodium carbonate solution. The resulting product was dehydrated and dried with hot air as in Example 8-1. The rubber masterbatch was found to contain 60 parts by mass of the carbon black and 25 parts by mass of the process oil relative to 100 parts by mass of the SBR when determined by the measurement method below. The organic acid content was 3.2% by mass when determined by the method below. Subsequently, a rubber composition was obtained as in Example 8-1.

(Example 8-2)

A rubber masterbatch was prepared in the same manner as in Example 8-1, except that the carbon black B was used instead of the carbon black A. The rubber masterbatch was found to contain 60 parts by mass of the carbon black and 25 parts by mass of the process oil relative to 100 parts by mass of the SBR when determined by the measurement method below. The organic acid content was 0.30% by mass when determined by the method below. Subsequently, a rubber composition was obtained as in Example 8-1.

(Comparative Example 8-2)

A rubber masterbatch was prepared in the same manner as in Comparative Example 8-1, except that the carbon black B was used instead of the carbon black A. The rubber masterbatch was found to contain 60 parts by mass of the carbon black and 25 parts by mass of the process oil relative to 100 parts by mass of the SBR when determined by the measurement method below. The organic acid content was 3.3% by mass when determined by the method below. Subsequently, a rubber composition was obtained as in Example 8-1.

(Example 8-3)

A rubber masterbatch was prepared in the same manner as in Example 8-1, except that 54 kg of an aqueous

dispersion containing 3.0% by mass of the carbon black A, 18.0 kg of the emulsion-polymerized rubber latex (SBR, solids content: 22.2% by mass), and 0.81 kg of the process oil were used. The dispersion immediately after the three-time washing with the aqueous sodium carbonate solution had a pH of 11.

The rubber masterbatch was found to contain 40 parts by mass of the carbon black and 20 parts by mass of the process oil relative to 100 parts by mass of the SBR when determined by the measurement method below. The organic acid content was 0.67% by mass when determined by the method below. Subsequently, a rubber composition was obtained as in Example 8-1.

(Examples 8-4 and 8-5)

A rubber masterbatch was prepared in the same manner as in Example 8-3, except that the washing with the aqueous sodium carbonate solution having a pH of 11 was repeated the number of times shown in Table 5. Table 5 shows the formulation of the rubber masterbatch and the organic acid content determined by the measurements method below.

(Comparative Example 8-3)

A rubber masterbatch crumb was prepared as in Example 8-3. An amount of 5 kg of the rubber masterbatch crumb was washed with 50 kg of 60°C warm water without washing with an aqueous sodium carbonate solution. The resulting product was dehydrated and dried with hot air as in Example 8-3. Table 5 shows the formulation of the rubber masterbatch and the organic acid content determined by the measurement methods below.

(Example 8-6)

A rubber masterbatch was prepared in the same manner as in Example 8-3, except that the carbon black B was used instead of the carbon black A. The dispersion immediately after the three-time washing with the aqueous sodium carbonate solution had a pH of 11.

The rubber masterbatch was found to contain 40 parts by mass of the carbon black and 20 parts by mass of the process oil relative to 100 parts by mass of the SBR when determined by the measurement method below. The organic acid content was 0.20% by mass when determined by the method below. Subsequently, a rubber composition was obtained as in Example 8-1.

(Example 8-7)

A rubber masterbatch was prepared in the same manner as in Example 8-6, except that the washing with the aqueous sodium carbonate solution having a pH of 11 was repeated the number of times shown in Table 5. Table 5 shows the formulation of the rubber masterbatch and the organic acid content determined by the measurements method below.

(Comparative Example 8-4)

A rubber masterbatch was prepared in the same manner as in Comparative Example 8-3, except that the carbon black B was used instead of the carbon black A. Table 5 shows the formulation of the rubber masterbatch and the organic acid content determined by the measurements method below.

[Composition analysis of rubber masterbatch]

<Amount of carbon black>

The amount of carbon black in the rubber masterbatch was calculated from the mass of residual carbon measured in a nitrogen atmosphere by a thermal decomposition method.

<Process oil content>

The process oil content in the rubber masterbatch was determined by extracting the rubber masterbatch with acetone, measuring the dry amount of the extract, and subtracting therefrom the organic acid content described below.

<Organic acid content>

The organic acid content in the rubber masterbatch was calculated by an organic acid analysis method in

conformity with JIS K 6237.

[Evaluation of physical properties]

Each rubber composition prepared as above was vulcanized at 155°C for 45 minutes, and measured for the tensile strength, abrasion resistance, and flex crack resistance by the methods below. Table 5 shows the results.

<Tensile strength>

The tensile strength is represented by a product of a tensile stress at break (TB) and an elongation at break (EB) determined in a tensile test of vulcanized rubber in conformity with JIS K 6251 (2010). The tensile strengths are expressed as an index relative to the value of the corresponding comparative example using an experimental system using the same carbon black as the standard (=100). A higher index indicates higher mechanical strength and better reinforcing properties due to carbon black.

<Abrasion resistance>

The abrasion loss measured at 40°C and a slip ratio of 40% per unit time using a Lambourn abrasion tester was determined as the abrasion resistance. The abrasion resistances are expressed as an index using the equation below, where A indicates the abrasion loss in the corresponding comparative example using an experimental system using the same carbon black, and B indicates the abrasion loss of a test sample (example). A higher index indicates better abrasion resistance.

$$\text{Abrasion resistance index} = 100 + [(A-B)/A] \times 100$$

<Flex crack resistance>

A 2-mm-diameter pore was formed in a test sample, and the sample was repeatedly stretched and flexed using a De Mattia flex tester available from Ueshima to evaluate crack growth. The length of a crack when the sample was flexed 5000 times or 10000 times at room temperature was measured. The flex crack resistances are expressed as an index using the equation below, where C indicates the length of a crack in the corresponding comparative example using an experimental system using the same formulation (without the organic acid-decreasing step), and D indicates the length of a crack in an example (with the organic acid-decreasing step). A higher index indicates better flex crack resistance.

$$\text{Flex crack resistance index} = 100 + [(C-D)/C] \times 100$$

[Table 5]

| | | | Formulation 1 | | Formulation 2 | | Formulation 3 | | | | Formulation 4 | | |
|---|---|---|---|---|---|---|---|---|---|---|---|---|---|
| | | | Example 8-1 | Comparative Example 8-1 | Example 8-2 | Comparative Example 8-2 | Example 8-3 | Example 8-4 | Example 8-5 | Comparative Example 8-3 | Example 8-6 | Example 8-7 | Comparative Example 8-4 |
| Formulation (parts by mass) | Wet masterbatch | SBR | 100 | 100 | 100 | 100 | 100 | 100 | 100 | 100 | 100 | 100 | 100 |
| | | Carbon black A | 60 | 60 | ---- | ---- | 40 | 40 | 40 | 40 | ---- | ---- | ---- |
| | | Carbon black B | ---- | ---- | 60 | 60 | ---- | ---- | ---- | ---- | 40 | 40 | 40 |
| | | Process oil | 25 | 25 | 25 | 25 | 20 | 20 | 20 | 20 | 20 | 20 | 20 |
| | Rubber composition ※ | Stearic acid | 1 | 1 | 1 | 1 | 1 | 1 | 1 | 1 | 1 | 1 | 1 |
| | | Sulfur | 1.75 | 1.75 | 1.75 | 1.75 | 1.75 | 1.75 | 1.75 | 1.75 | 1.75 | 1.75 | 1.75 |
| | | Zinc oxide | 3 | 3 | 3 | 3 | 3 | 3 | 3 | 3 | 3 | 3 | 3 |
| | | Vulcanization accelerator | 1.4 | 1.4 | 1.4 | 1.4 | 1.4 | 1.4 | 1.4 | 1.4 | 1.4 | 1.4 | 1.4 |
| Organic acid-decreasing step for wet masterbatch | | | Performed | Not performed | Performed | Not performed | Performed | Performed | Performed | Not performed | Performed | Performed | Not performed |
| | Number of washing cycles with aqueous sodium carbonate (times) | | 3 | | 3 | | 3 | 2 | 1 | | 3 | 2 | |
| Organic acid content in wet masterbatch (% by mass) | | | 0.34 | 3.2 | 0.30 | 3.3 | 0.67 | 1.2 | 1.7 | 4.0 | 0.20 | 0.67 | 4.0 |
| Physical properties of rubber composition (index) | Tensile strength | | 114 | 100 | 118 | 100 | 117 | 129 | 110 | 100 | 106 | 98 | 100 |
| | Abrasion resistance | | 107 | 100 | 101 | 100 | 102 | 103 | 102 | 100 | 98 | 102 | 100 |
| | Flex crack resistance | <evaluation after 5000-time flexing> | 123 | 100 | 134 | 100 | - | - | - | - | - | - | - |
| | | <evaluation after 10000-time flexing> | - | - | - | - | 129 | 146 | 103 | 100 | 135 | 135 | 100 |

※ Formulation relative to 100 parts by mass of SBR in rubber masterbatch

Table 5 demonstrates that the rubber masterbatch of the present invention having an organic acid content of at most 2.0% by mass was excellent in the mechanical strength, abrasion resistance, and flex crack resistance. In particular,

a rubber composition which was formed from a rubber masterbatch having an organic acid content of at most 1.0% by mass was greatly excellent in all of the mechanical strength, abrasion resistance, and flex crack resistance.

Such a significantly excellent effect of improving these properties was also achieved in the case of using the rubber masterbatch prepared in Example 8-1 or 8-2 as the wet masterbatch according to the formulation for a tread shown in Table 1-1, 1-2, 1-3, or 1-4, according to the formulation for a tread shown in Table 2-2 or 2-3, according to the formulation for a side wall shown in Table 3, or according to the formulation for a carcass ply shown in Table 4.

## Claims

**1.** A pneumatic tire, comprising

at least one tire component selected from the group consisting of a sidewall, and a tire internal component, the at least one tire component being formed from a rubber composition comprising carbon black, silica, and an emulsion-polymerized rubber that has an acetone extractable content of at most 2.5% by mass when determined by an acetone extraction method,
wherein the rubber composition comprises, relative to 100 parts by mass of a rubber component of the rubber composition 5 to 100 parts by mass of the carbon black,
wherein the rubber composition used for sidewalls and tire internal components comprises 10 % by mass or more and 70 % by mass or less of the emulsion-polymerized rubber, based on 100% by mass of the rubber component,
wherein the acetone extractable content in the emulsion-polymerized rubbers is determined in conformity with JIS K 6350.

**2.** A pneumatic tire, comprising

at least one tire component selected from the group consisting of a tread, a sidewall, and a tire internal component, the at least one tire component being formed from a rubber composition comprising carbon black, silica, and an emulsion-polymerized rubber that has a soap content of at most 2.5% by mass and an organic acid content of at most 2.5% by mass,
wherein the rubber composition comprises, relative to 100 parts by mass of a rubber component of the rubber composition 5 to 100 parts by mass of the carbon black, and
wherein the rubber composition used for treads comprises 5 % by mass or more and 90 % by mass or less of the emulsion-polymerized rubber, based on 100% by mass of the rubber component, or
wherein the rubber composition used for sidewalls and tire internal components comprises 10 % by mass or more and 70 % by mass or less of the emulsion-polymerized rubber, based on 100% by mass of the rubber component,
wherein the soap content and the organic acid content in the emulsion-polymerized rubber are determined in conformity with JIS K 6237.

**3.** The pneumatic tire according to claim 1 or 2,

wherein the rubber composition comprises, relative to 100 parts by mass of a rubber component of the rubber composition, 5 to 100 parts by mass of the silica, and
the rubber composition comprises a silane coupling agent in an amount of 2 to 20 parts by mass relative to 100 parts by mass of the silica.

**4.** The pneumatic tire according to any one of claims 1 to 3,
wherein the emulsion-polymerized rubber is an emulsion-polymerized styrene-butadiene rubber.

**5.** The pneumatic tire according to any one of claims 1 to 4,
wherein the emulsion-polymerized rubber has an Mp of 250000 or higher and an Mw/Mn ratio of 3 or more.

**6.** The pneumatic tire according to any one of claims 1 to 5,
wherein the emulsion-polymerized rubber is a modified emulsion-polymerized rubber that is obtained by emulsion-polymerizing a radical polymerizable monomer in the presence of a polar functional group-containing thiol compound, and has a polar functional group at a chain terminal.

**7.** The pneumatic tire according to claim 6,

wherein the polar functional group-containing thiol compound is a compound represented by Formula (1):

$$X\text{-}R^1\text{-}SH \qquad (1)$$

wherein X represents an ester group, a hydroxyl group, a carboxyl group, an amino group, or an alkoxysilyl group; and $R^1$ represents an optionally substituted alkylene group or arylene group.

**8.** The pneumatic tire according to claim 6 or 7,
wherein the modified emulsion-polymerized rubber has an Mw/Mn ratio of 4 or more.

**9.** The pneumatic tire according to any one of claims 1 to 8,
wherein the rubber composition further comprises a solution-polymerized styrene-butadiene rubber.

**10.** A rubber masterbatch, comprising

a rubber component derived from an emulsion-polymerized rubber latex, and
carbon black,
the rubber masterbatch having an organic acid content of at most 2.0% by mass based on total solids of the rubber masterbatch,
wherein the carbon black is mixed in an amount of 5 to 100 parts by mass relative to 100 parts by mass of the rubber component of the emulsion-polymerized rubber latex,
wherein the amount of the rubber component in the emulsion-polymerized rubber latex is 15 to 60% by mass,
wherein the organic acid content in the emulsion-polymerized rubber is determined in conformity with JIS K 6237.

**11.** The rubber masterbatch according to claim 10,
wherein the rubber masterbatch is obtained by the steps of

mixing an emulsion-polymerized rubber latex and a carbon black dispersion at a pH of 1.0 to 6.0, and
separating liquid from the mixed dispersion.

**12.** The rubber masterbatch according to claim 11,
wherein the rubber masterbatch is obtained by the step of adjusting a pH of the mixed dispersion to 8.0 to 13.5 after the mixing step.

**13.** A method for producing a rubber masterbatch, comprising the steps of

mixing an emulsion-polymerized rubber latex and a carbon black dispersion at a pH of 1.0 to 6.0, and
separating liquid from the mixed dispersion,
the method further comprising the step of reducing the organic acid content to at most 2.0% by mass based on total solids of the resulting rubber masterbatch, wherein the organic acid content is determined by the method defined in the description, and
wherein the carbon black is mixed in an amount of 5 to 100 parts by mass relative to 100 parts by mass of the rubber component of the emulsion-polymerized rubber latex,
wherein an amount of the rubber component in the emulsion-polymerized rubber latex is 15 to 60% by mass.

## Patentansprüche

**1.** Luftreifen, umfassend

mindestens eine Reifenkomponente, welche ausgewählt ist aus der Gruppe bestehend aus einer Seitenwand und einer inneren Reifenkomponente, wobei die mindestens eine Reifenkomponente mit einer Kautschukzusammensetzung gebildet ist, die Ruß, Siliziumdioxid und einen emulsionspolymerisierten Kautschuk umfasst, der einen Acetonextrahierbaren Gehalt von höchstens 2,5 Massen-% aufweist, wenn durch ein Aceton-Extraktionsverfahren bestimmt,
wobei die Kautschukzusammensetzung, relativ zu 100 Massenteilen einer Kautschukkomponente der Kautschukzusammensetzung, 5 bis 100 Massenteile des Rußes umfasst,
wobei die für Seitenwände und innere Reifenkomponenten verwendete Kautschukzusammensetzung 10

Massen-% oder mehr und 70 Massen-% oder weniger des emulsionspolymerisieren Kautschuks umfasst, bezogen auf 100 Massen-% der Kautschukkomponente,
wobei der Aceton-extrahierbare Gehalt in den emulsionspolymerisierten Kautschuken in Übereinstimmung mit JIS K 6350 bestimmt ist.

**2.** Luftreifen, umfassend

mindestens eine Reifenkomponente, welche ausgewählt ist aus der Gruppe bestehend aus einem Laufstreifen, einer Seitenwand und einer inneren Reifenkomponente, wobei die mindestens eine Reifenkomponente mit einer Kautschukzusammensetzung gebildet ist, die Ruß, Siliziumdioxid und einen emulsionspolymerisierten Kautschuk umfasst, der einen Seifengehalt von höchstens 2,5 Massen-% und einen Gehalt an organischer Säure von höchstens 2,5 Massen-% aufweist,
wobei die Kautschukzusammensetzung, relativ zu 100 Massenteilen einer Kautschukkomponente der Kautschukzusammensetzung, 5 bis 100 Massenteile des Rußes umfasst, und
wobei die für Laufstreifen verwendete Kautschukzusammensetzung 5 Massen-% oder mehr und 90 Massen-% oder weniger des emulsionspolymerisierten Kautschuks umfasst, bezogen auf 100 Massen-% der Kautschukkomponente, oder
wobei die für Seitenwände und innere Reifenkomponenten verwendete Kautschukzusammensetzung 10 Massen-% oder mehr und 70 Massen-% oder weniger des emulsionspolymerisierten Kautschuks umfasst, bezogen auf 100 Massen-% der Kautschukkomponente,
wobei der Seifengehalt und der Gehalt an organischer Säure in dem emulsionspolymerisierten Kautschuk in Übereinstimmung mit JIS K 6237 bestimmt sind.

**3.** Luftreifen nach Anspruch 1 oder 2,

wobei die Kautschukzusammensetzung, relativ zu 100 Massenteilen einer Kautschukkomponente der Kautschukzusammensetzung, 5 bis 100 Massenteile des Siliziumdioxids umfasst, und
die Kautschukzusammensetzung ein Silan-Kopplungsmittel in einer Menge von 2 bis 20 Massenteilen relativ zu 100 Massenteilen des Siliziumdioxids umfasst.

**4.** Luftreifen nach einem der Ansprüche 1 bis 3,
wobei der emulsionspolymerisierte Kautschuk ein emulsionspolymerisierter Styrol-Butadien-Kautschuk ist.

**5.** Luftreifen nach einem der Ansprüche 1 bis 4,
wobei der emulsionspolymerisierte Kautschuk ein Mp von 250000 oder höher und ein Mw/Mn-Verhältnis von 3 oder mehr aufweist.

**6.** Luftreifen nach einem der Ansprüche 1 bis 5,
wobei der emulsionspolymerisierte Kautschuk ein modifizierter emulsionspolymerisierter Kautschuk ist, der durch Emulsionspolymerisieren eines radikalisch polymerisierbaren Monomers in der Gegenwart einer eine polare funktionelle Gruppe enthaltenden Thiolverbindung erhalten ist und eine polare funktionelle Gruppe an einem Kettenende aufweist.

**7.** Luftreifen nach Anspruch 6,
wobei die eine polare funktionelle Gruppe enthaltende Thiolverbindung eine durch Formel (1) dargestellte Verbindung ist:

$$X\text{-}R^1\text{-}SH \qquad (1)$$

wobei X eine Estergruppe, eine Hydroxylgruppe, eine Carboxylgruppe, eine Aminogruppe oder eine Alkoxysilylgruppe darstellt; und $R^1$ eine optional substituierte Alkylengruppe oder Arylengruppe darstellt.

**8.** Luftreifen nach Anspruch 6 oder 7,
wobei der modifizierte emulsionspolymerisierte Kautschuk ein Mw/Mn-Verhältnis von 4 oder mehr aufweist.

**9.** Luftreifen nach einem der Ansprüche 1 bis 8,
wobei die Kautschukzusammensetzung zudem einen lösungspolymerisierten Styrol-Butadien-Kautschuk umfasst.

**10.** Kautschuk-Masterbatch, umfassend

eine aus einem emulsionspolymerisierten Kautschuklatex stammende Kautschukkomponente, und
Ruß,
wobei der Kautschuk-Masterbatch einen Gehalt an organischer Säure von höchstens 2,0 Massen-% aufweist, bezogen auf Gesamtfeststoffe des Kautschuk-Masterbatches,
wobei der Ruß in einer Menge von 5 bis 100 Massenteilen beigemengt ist, relativ zu 100 Massenteilen der Kautschukkomponente des emulsionspolymerisierten Kautschuklatex,
wobei die Menge der Kautschukkomponente in dem emulsionspolymerisierten Kautschuklatex 15 bis 60 Massen-% beträgt,
wobei der Gehalt an organischer Säure in dem emulsionspolymerisierten Kautschuk in Übereinstimmung mit JIS K 6237 bestimmt ist.

**11.** Kautschuk-Masterbatch nach Anspruch 10,

wobei der Kautschuk-Masterbatch erhalten ist durch die Schritte des
Vermischens eines emulsionspolymerisierten Kautschuklatex und einer Ruß-Dispersion bei einem pH von 1,0 bis 6,0, und
Abtrennens von Flüssigkeit aus der vermischten Dispersion.

**12.** Kautschuk-Masterbatch nach Anspruch 11,
wobei der Kautschuk-Masterbatch erhalten ist durch den Schritt des Einstellens eines pH der vermischten Dispersion auf 8,0 bis 13,5 nach dem Vermischungsschritt.

**13.** Verfahren zur Herstellung eines Kautschuk-Masterbatches, umfassend die Schritte des

Vermischens eines emulsionspolymerisierten Kautschuklatex und einer Ruß-Dispersion bei einem pH von 1,0 bis 6,0, und
Abtrennens von Flüssigkeit aus der vermischten Dispersion,
wobei das Verfahren zudem den Schritt des Verringerns des Gehalts an organischer Säure auf höchstens 2,0 Massen-% umfasst, bezogen auf Gesamtfeststoffe des entstandenen Kautschuk-Masterbatches, wobei der Gehalt an organischer Säure durch das in der Beschreibung definierte Verfahren bestimmt ist, und
wobei der Ruß in einer Menge von 5 bis 100 Massenteilen beigemengt wird, relativ zu 100 Massenteilen der Kautschukkomponente des emulsionspolymerisierten Kautschuklatex,
wobei eine Menge der Kautschukkomponente in dem emulsionspolymerisierten Kautschuklatex 15 bis 60 Massen-% beträgt.

## Revendications

**1.** Pneumatique comprenant

au moins un composant de pneu sélectionné dans le groupe constitué d'une paroi latérale et d'un composant interne de pneu, l'au moins un composant de pneu étant formé d'une composition de caoutchouc comprenant du noir de carbone, de la silice et un caoutchouc polymérisé en émulsion qui a une teneur extractible par l'acétone d'au maximum 2,5 % en masse lorsqu'elle est déterminée par un procédé d'extraction à l'acétone, dans lequel la composition de caoutchouc comprend, par rapport à 100 parties en masse d'un composant de caoutchouc de la composition de caoutchouc, 5 à 100 parties en masse de noir de carbone,
dans lequel la composition de caoutchouc utilisée pour les parois latérales et les composants internes de pneu comprend 10 % en masse ou plus, et 70 % en masse ou moins, de caoutchouc polymérisé en émulsion, sur la base de 100 % en masse de composant de caoutchouc,
dans lequel la teneur extractible par l'acétone dans les caoutchoucs polymérisés en émulsion est déterminée selon la méthode JIS K 6350.

**2.** Pneumatique comprenant

au moins un composant de pneu sélectionné dans le groupe constitué d'une bande de roulement, d'une paroi latérale et d'un composant interne de pneu, l'au moins un composant de pneu étant formé à partir d'une

composition de caoutchouc comprenant du noir de carbone, de la silice et un caoutchouc polymérisé en émulsion qui a une teneur en savon d'au maximum 2,5 % en masse et une teneur en acide organique d'au maximum 2,5 % en masse,

dans lequel la composition de caoutchouc comprend, par rapport à 100 parties en masse de composant de caoutchouc de la composition de caoutchouc, 5 à 100 parties en masse de noir de carbone, et

dans lequel la composition de caoutchouc utilisée pour les bandes de roulement comprend 5 % en masse ou plus et 90 % en masse ou moins de caoutchouc polymérisé en émulsion, sur la base de 100 % en masse de composant de caoutchouc, ou

dans lequel la composition de caoutchouc utilisée pour les parois latérales et les composants internes de pneu comprend 10 % en masse ou plus et 70 % en masse ou moins de caoutchouc polymérisé en émulsion, sur la base de 100 % en masse de composant de caoutchouc,

dans lequel la teneur en savon et la teneur en acide organique dans le caoutchouc polymérisé en émulsion sont déterminées selon la méthode JIS K 6237.

**3.** Pneumatique selon la revendication 1 ou la revendication 2,

dans lequel la composition de caoutchouc comprend, par rapport à 100 parties en masse de composant de caoutchouc de la composition de caoutchouc, 5 à 100 parties en masse de silice, et

la composition de caoutchouc comprend un agent de couplage silane dans une quantité de 2 à 20 parties en masse par rapport à 100 parties en masse de silice.

**4.** Pneumatique selon l'une quelconque des revendications 1 à 3,
dans lequel le caoutchouc polymérisé en émulsion est un caoutchouc styrène butadiène polymérisé en émulsion.

**5.** Pneumatique selon l'une quelconque des revendications 1 à 4,
dans lequel le caoutchouc polymérisé en émulsion possède une Mp de 250000 ou plus et un ratio Mw/Mn de 3 ou plus.

**6.** Pneumatique selon l'une quelconque des revendications 1 à 5,
dans lequel le caoutchouc polymérisé en émulsion est un caoutchouc polymérisé en émulsion modifié qui est obtenu en polymérisant en émulsion un monomère polymérisable par voie radicalaire en présence d'un composé thiol contenant un groupement fonctionnel polaire, et possède un groupement fonctionnel polaire au niveau d'une chaine terminale.

**7.** Pneumatique selon la revendication 6,

dans lequel le composé thiol contenant un groupement fonctionnel polaire est un composé représenté par la formule (1) :

$$X\text{-}R1\text{-}SH \qquad (1)$$

où X représente un groupement ester, un groupement hydroxyle, un groupement carboxyle, un groupement amino ou un groupement alcoxysilyle ;

et R1 représente un groupement alcylène éventuellement substitué ou un groupement arylène.

**8.** Pneumatique selon la revendication 6 ou la revendication 7
dans lequel le caoutchouc polymérisé en émulsion modifié possède un ratio Mw/Mn de 4 ou plus.

**9.** Pneumatique selon l'une quelconque des revendications 1 à 8,
dans lequel la composition de caoutchouc comprend en outre un caoutchouc styrène butadiène polymérisé en solution.

**10.** Mélange-maître de caoutchouc comprenant

un composant de caoutchouc dérivé d'un latex de caoutchouc polymérisé en émulsion et du noir de carbone,

le mélange-maître de caoutchouc ayant une teneur en acide organique d'au maximum 2,0 % en masse sur la base des solides totaux du mélange-maître de caoutchouc,

dans lequel le noir de carbone est mélangé dans une quantité de 5 à 100 parties en masse par rapport à 100 parties en masse de composant de caoutchouc du latex de caoutchouc polymérisé en émulsion,

dans lequel la quantité de composant de caoutchouc dans le latex de caoutchouc polymérisé en émulsion est de 15 à 60 % en masse,
dans lequel la teneur en acide organique dans le caoutchouc polymérisé en émulsion est déterminée selon la méthode JIS K 6237.

**11.** Mélange-maître de caoutchouc selon la revendication 10,

le mélange-maître de caoutchouc étant obtenu par les étapes de mélange d'un latex de caoutchouc polymérisé en émulsion et d'une dispersion de noir de carbone à un pH de 1,0 à 6,0, et
de séparation du liquide à partir de la dispersion.

**12.** Mélange-maître de caoutchouc selon la revendication 11,
le mélange-maître de caoutchouc étant obtenu par l'étape d'ajustement du pH de la dispersion mélangée à une valeur de 8,0 à 13,5 après l'étape de mélange.

**13.** Procédé de production d'un mélange-maître de caoutchouc, comprenant les étapes de

mélange d'un latex de caoutchouc polymérisé en émulsion et d'une dispersion de noir de carbone à un pH de 1,0 à 6,0, et
de séparation du liquide à partir de la dispersion mélangée,
le procédé comprenant en outre l'étape de réduction de la teneur en acide organique à au maximum 2,0 % en masse sur la base des solides totaux du mélange-maître de caoutchouc résultant,
dans lequel la teneur en acide organique est déterminée par la méthode définie dans la description, et
dans lequel le noir de carbone est mélangé dans une quantité de 5 à 100 parties en masse par rapport à 100 parties en masse de composant de caoutchouc du latex de caoutchouc polymérisé en émulsion,
dans lequel une quantité de composant de caoutchouc dans le latex de caoutchouc polymérisé en émulsion est de 15 à 60% en masse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000248120 A
- JP 4272289 B
- JP 2004043598 A
- JP 2004277443 A
- FR 5010